# EUROPEAN PATENT APPLICATION

(11) **EP 4 683 398 A1**
(43) Date of publication of application: **21.01.2026**
(21) Application number: 24769897.0
(22) Date of filing: 11.03.2024
(51) Int. Cl.: H04W 52/14

(54) **METHOD USED IN NEW RADIO SYSTEM, AND APPARATUS**

(30) Priority: 15.03.2023 CN 202310251422; 20.03.2023 CN 202310277385
(71) Applicant: Apogee Networks, LLC, Dallas, TX 75201 (US)
(72) Inventor: ZHANG, Jinfang, Shanghai 201206 (CN); ZHANG, Xiaobo, Shanghai 201206 (CN)
(74) Representative: Gunzelmann, Rainer
(86) International application number: PCT/CN2024/080905
(87) International publication number: WO 2024/188204

(57) **Abstract**

Disclosed in the present application are a method used in a new radio system, and an apparatus. Serving as a response to any condition in a first condition set being satisfied, a first node striggers a first PHR for a first cell, and the first cell waits to be designated as a serving cell. The first condition set comprises: since the latest PHR transmission, changes in path loss of at least one first type of signal in the first cell exceed a first threshold, and the first threshold is configurable. The present application may transmit a PHR to a network in advance, thus better ensuring the performance of power control.

## Description

### Technical Field

The present application relates to a method and apparatus in a new radio (NR) system, in particular to a method and apparatus for power reporting in a new radio system.

### Background Art

In an NR (New Radio) system, UE (User Equipment) transmits a PHR (Power Headroom Reporting) to assist a base station in performing uplink power control for uplink transmission on a serving cell. Typical events used for triggering the PHR comprise timer expiration, PHR function reconfiguration, or PScell (Primary SCG Cell, wherein SCG is Secondary Cell Group) addition, etc.

In the NR system, transmission waveforms used for an uplink comprise at least DFT-s-OFDM (Discrete Fourier Transform-spread-OFDM) and CP-OFDM (Cyclic Prefix Orthogonal Frequency Division Multiplexing), wherein the DFT-s-OFDM is also known as transform precoding, and CP-OFDM is also known as disabled transform precoding.

When the UE (User Equipment) moves from the coverage of one cell to the coverage of another cell, it is necessary to change the serving cell of the UE, i.e., to perform switching from a source cell to a target cell. Existing serving cell changes are generally triggered by L3 (Layer 3) measurements, and implemented through an RRC (Radio Resource Control) signaling triggered reconfiguration with synchronization. The serving cell changes implemented at the L3 have the characteristics of long latency, high signaling overhead, and long interruption time. To overcome the above shortcomings, a 3GPP (3rd Generation Partner Project) RAN (Radio Access Network) introduced technologies such as dual connectivity (DC), conditional PSCell (Primary SCG (Secondary Cell Group) Cell) change (CPC), conditional PSCell addition (CPA), and conditional handover (CHO) in Rel (Release) -17. However, these technologies are still implemented by the L3 and cannot completely solve the above problems. At the 3GPP RAN #94e plenary meeting, it was decided to initiate a WI (Work Item) standardization work for L1/L2 (Layer 1/Layer 2)-based mobility enhancement technology. The design goal of the L1/L2-based mobility enhancement technology is to achieve rapid switching of the serving cells of the UE.

### Summary of the Invention

The inventors have found through research that, in order to better ensure the performance of power control, it is necessary to study how to report power information for different cells in scenarios where an uplink transmission is configured to support dynamic waveform switching. In view of the above problem, the present application discloses a solution. In the absence of conflicts, embodiments and features in the embodiments in a first node of the present application may be applied to a second node, and vice versa. In the absence of conflicts, embodiments and features in the embodiments of the present application may be arbitrarily combined with each other. Further, although the original intention of the present application is for a Uu air interface, the present application can also be used for a PC5 interface. Further, although the original intention of the present application is for terminal and base station scenarios, the present application is also applicable to a V2X (Vehicle-to-Everything) scenario, as well as communication scenarios between terminals and relays and between relays and base stations to achieve technical effects similar to those in the terminal and base station scenarios. In addition, the use of a unified solution for different scenarios (including but not limited to the V2X scenario and the communication scenario between terminals and base stations) also facilitates the reduction of hardware complexity and costs. In particular, the interpretation of the terminologies, nouns, functions, and variables in the present application (if not specifically noted) may refer to the definitions in the specification protocols TS36 series, TS38 series, and TS37 series of 3GPP (3rd Generation Partner Project).

The present application discloses a method in a first node used in new radio (NR), characterized by comprising:
receiving a first signaling, the first signaling being used for configuring an uplink transmission on a first cell to support dynamic waveform switching; and
transmitting a first PUSCH, the first PUSCH comprising a first MAC CE,
wherein the first MAC CE designates a first power value for the first cell, and the first power value is calculated based on a first waveform; whether the first MAC CE designates a second power value for the first cell depends on the first cell, and the second power value is calculated based on a second waveform; and the dynamic waveform switching is between the first waveform and the second waveform.

As one embodiment, the present application is applicable to a scenario where an uplink transmission supports dynamic waveform switching.

As one embodiment, the problem to be solved by the present application is: for a scenario where an uplink transmission supports dynamic waveform switching, how to report power information for different cells.

As one embodiment, the above method can improve the flexibility or accuracy of power reporting and better adapt to the scenario of flexible switching of transmission waveforms.

As one embodiment, the above method may ensure the performance of power control.

As one embodiment, the above method determines whether to report the second power value according to the first cell, which can reduce signaling overhead and save air interface resources.

According to one aspect of the present application, it comprises:
according to the configuration of the first signaling, at least one UL grant DCI format used for scheduling the first cell comprises 1 bit, the 1 bit designating one waveform from the first waveform and the second waveform.

As one embodiment, the above method has compatibility.

According to one aspect of the present application, it comprises:
whether the first MAC CE designates a second power value for the first cell depending on the first cell comprises: when the first cell is a serving cell, the first MAC CE designates the second power value for the first cell.

As one embodiment, the above method may better support the scenario of flexible switching of uplink transmission waveforms.

According to one aspect of the present application, it comprises:
whether the first MAC CE designates a second power value for the first cell depending on the first cell comprises: when the first cell waits to be designated as a serving cell, the first MAC CE does not designate the second power value for the first cell.

As one embodiment, the above method is applicable to mobility scenarios.

As one embodiment, the above method is applicable to LTM (L1/L2-triggered mobility) scenarios.

As one embodiment, the above method is applicable to cell switch scenarios triggered by an RRC (Radio Resource Control) layer.

As one embodiment, the above method is applicable to CHO (Conditional Handover) scenarios.

As one embodiment, the above method is applicable to CPA (Conditional PSCell Addition) scenarios.

As one embodiment, the above method is applicable to CPC (Conditional PSCell Change) scenarios.

As one embodiment, the above method may save signaling overhead, and save air interface resources.

As one embodiment, the above method reports power information in advance, which may better ensure the performance of power control.

According to one aspect of the present application, it comprises:
whether the first MAC CE designates a second power value for the first cell depending on the first cell comprises: when the first cell waits to be designated as a serving cell, whether the first MAC CE designates the second power value for the first cell is related to resources allocated to the first PUSCH.

As one embodiment, the above method may effectively utilize air interface resources.

According to one aspect of the present application, it comprises:
when the first cell waits to be designated as a serving cell, the first waveform is determined by the first node itself,
wherein a subheader of the first MAC CE comprises 1 bit, and the 1 bit designates the first waveform.

As one embodiment, the above method can flexibly select an uplink transmission waveform.

According to one aspect of the present application, it comprises:
receiving a second signaling, the second signaling being used for triggering for transmitting a first random access preamble on the first cell; and
serving as a response to receiving the second signaling, triggering a first PHR for the first cell,
wherein at least the first PHR is used for generating the first MAC CE; and the first cell waits to be designated as a serving cell.

As one embodiment, the above method may transmit power information to a network in advance, thereby better ensuring the performance of power control.

As one embodiment, the above method may transmit power information to a network in advance to execute more accurate uplink scheduling after the first cell is designated as a serving cell.

The present application discloses a method in a second node used in new radio, characterized by comprising:
transmitting a first signaling, the first signaling being used for configuring an uplink transmission on a first cell to support dynamic waveform switching; and
receiving a first PUSCH, the first PUSCH comprising a first MAC CE,
wherein the first MAC CE designates a first power value for the first cell, and the first power value is calculated based on a first waveform; whether the first MAC CE designates a second power value for the first cell depends on the first cell, and the second power value is calculated based on a second waveform; and the dynamic waveform switching is between the first waveform and the second waveform.

According to one aspect of the present application, it comprises:
according to the configuration of the first signaling, at least one UL grant DCI format used for scheduling the first cell comprises 1 bit, the 1 bit designating one waveform from the first waveform and the second waveform.

According to one aspect of the present application, it comprises:
whether the first MAC CE designates a second power value for the first cell depending on the first cell comprises: when the first cell is a serving cell, the first MAC CE designates the second power value for the first cell.

According to one aspect of the present application, it comprises:
whether the first MAC CE designates a second power value for the first cell depending on the first cell comprises: when the first cell waits to be designated as a serving cell, the first MAC CE does not designate the second power value for the first cell.

According to one aspect of the present application, it comprises:
whether the first MAC CE designates a second power value for the first cell depending on the first cell comprises: when the first cell waits to be designated as a serving cell, whether the first MAC CE designates the second power value for the first cell is related to resources allocated to the first PUSCH.

According to one aspect of the present application, it comprises:
when the first cell waits to be designated as a serving cell, the first waveform is determined by a recipient of the first signaling itself,
wherein the first MAC CE comprises 1 bit, and the 1 bit designates the first waveform.

According to one aspect of the present application, it comprises:
transmitting a second signaling, the second signaling being used for triggering for transmitting a first random access preamble on the first cell,
wherein the second signaling is used for triggering a first PHR for the first cell; at least the first PHR is used for generating the first MAC CE; and the first cell waits to be designated as a serving cell.

The present application discloses a first node used in new radio, characterized by comprising:
a first receiver receiving a first signaling, the first signaling being used for configuring an uplink transmission on a first cell to support dynamic waveform switching; and
a first transmitter transmitting a first PUSCH, the first PUSCH comprising a first MAC CE,
wherein the first MAC CE designates a first power value for the first cell, and the first power value is calculated based on a first waveform; whether the first MAC CE designates a second power value for the first cell depends on the first cell, and the second power value is calculated based on a second waveform; and the dynamic waveform switching is between the first waveform and the second waveform.

The present application discloses a second node used in new radio, characterized by comprising:
a second transmitter transmitting a first signaling, the first signaling being used for configuring an uplink transmission on a first cell to support dynamic waveform switching; and
a second receiver receiving a first PUSCH, the first PUSCH comprising a first MAC CE,
wherein the first MAC CE designates a first power value for the first cell, and the first power value is calculated based on a first waveform; whether the first MAC CE designates a second power value for the first cell depends on the first cell, and the second power value is calculated based on a second waveform; and the dynamic waveform switching is between the first waveform and the second waveform.

The inventors have found through research that, in mobility scenarios, in order to better ensure the performance of power control, it is necessary to study how to report power headroom for a cell waiting to be designated as a serving cell. In view of the above problem, the present application discloses a solution. In the absence of conflicts, embodiments and features in the embodiments in a first node of the present application may be applied to a second node, and vice versa. In the absence of conflicts, embodiments and features in the embodiments of the present application may be arbitrarily combined with each other. Further, although the original intention of the present application is for a Uu air interface, the present application can also be used for a PC5 interface. Further, although the original intention of the present application is for terminal and base station scenarios, the present application is also applicable to a V2X (Vehicle-to-Everything) scenario, as well as communication scenarios between terminals and relays and between relays and base stations to achieve technical effects similar to those in the terminal and base station scenarios. In addition, the use of a unified solution for different scenarios (including but not limited to the V2X scenario and the communication scenario between terminals and base stations) also facilitates the reduction of hardware complexity and costs. In particular, the interpretation of the terminologies, nouns, functions, and variables in the present application (if not specifically noted) may refer to the definitions in the specification protocols TS36 series, TS38 series, and TS37 series of 3GPP.

The present application discloses a method in a first node used in new radio (NR), characterized by comprising:
serving as a response to any condition in a first condition set being satisfied, triggering a first PHR for a first cell, the first cell waiting to be designated as a serving cell,
wherein the first condition set comprises: since the latest PHR transmission, changes in path loss of at least one first type of signal in the first cell exceed a first threshold, and the first threshold is configurable.

As one embodiment, the problem to be solved by the present application is: triggering a PHR for a cell waiting to be designated as a serving cell.

As one embodiment, the present application is applicable to mobility scenarios.

As one embodiment, the present application is applicable to cell switch scenarios triggered by a protocol layer below an RRC (Radio Resource Control) layer.

As one embodiment, the present application is applicable to LTM (L1/L2-triggered mobility) scenarios.

As one embodiment, the present application is applicable to cell switch scenarios triggered by an RRC layer.

As one embodiment, the present application is applicable to CHO scenarios.

As one embodiment, the present application is applicable to CPA scenarios.

As one embodiment, the present application is applicable to CPC scenarios.

As one embodiment, the above method may transmit a PHR to a network in advance, thereby better ensuring the performance of power control.

As one embodiment, the above method may transmit a PHR to a network in advance to rapidly achieve an uplink transmission after the first cell is designated as a serving cell.

As one embodiment, the above method may transmit a PHR to a network in advance to execute more accurate uplink scheduling after the first cell is designated as a serving cell.

As one embodiment, the above method may reduce the interruption time of services, particularly uplink services, during mobility.

According to one aspect of the present application, it comprises:
the first condition set comprises receiving a first signaling, the first signaling being used for triggering for transmitting a first random access preamble on the first cell.

As one embodiment, the first cell waits to be designated as a serving cell after the first signaling is received.

According to one aspect of the present application, it comprises:
serving as a response to a second condition set being satisfied, transmitting a first PHR MAC CE,
wherein the second condition set comprises at least one PHR being triggered and not cancelled, the at least one PHR comprising the first PHR.

As one embodiment, the above aspect has better compatibility.

According to one aspect of the present application, it comprises:
the first PHR MAC CE comprises at least the latter of a first field and a second field, the first field designating the first cell, and the second field designating a maximum output power value for a first transmission waveform,
wherein the first transmission waveform is one of candidate waveform sets, the candidate waveform sets comprising DFT-S-OFDM and CP-OFDM; and the first transmission waveform is used for an uplink transmission in the first cell.

As one embodiment, the above method can flexibly select a transmission waveform.

According to one aspect of the present application, it comprises:
receiving a second signaling, the second signaling being used for configuring the first cell, and the second signaling designating the first transmission waveform.

As one embodiment, the first cell waits to be designated as a serving cell after the second signaling is received.

As one embodiment, the above method can improve the configuration flexibility or accuracy of the PHR.

According to one aspect of the present application, it comprises:
the first node determines the first transmission waveform by itself.

As one embodiment, the above method can flexibly select a transmission waveform.

According to one aspect of the present application, it comprises:
receiving a third signaling after the first signaling, the third signaling designating the first cell as a serving cell,
wherein the third signaling is used for cell switch in a protocol layer below an RRC layer.

As one embodiment, the above method can achieve rapid cell switch, and reduce the interruption time of services during mobility.

The present application discloses a method in a second node used in new radio, characterized by comprising:
when a second condition set is satisfied, receiving a first PHR MAC CE,
wherein the second condition set comprises at least one PHR being triggered and not cancelled, the at least one PHR comprising a first PHR, the first PHR being triggered for a first cell when any condition in a first condition set is satisfied, and the first cell waiting to be designated as a serving cell; and the first condition set comprises: since the latest PHR transmission, changes in path loss of at least one first type of signal in the first cell exceed a first threshold, and the first threshold is configurable.

According to one aspect of the present application, it comprises:
the first condition set comprises receiving a first signaling, the first signaling being used for triggering for transmitting a first random access preamble on the first cell.

According to one aspect of the present application, it comprises:
the first PHR MAC CE comprises at least the latter of a first field and a second field, the first field designating the first cell, and the second field designating a maximum output power value for a first transmission waveform,
wherein the first transmission waveform is one of candidate waveform sets, the candidate waveform sets comprising DFT-S-OFDM and CP-OFDM; and the first transmission waveform is used for an uplink transmission in the first cell.

According to one aspect of the present application, it comprises:
transmitting a second signaling, the second signaling being used for configuring the first cell, and the second signaling designating the first transmission waveform.

According to one aspect of the present application, it comprises:
a sender of the first PHR MAC CE determines the first transmission waveform by itself.

According to one aspect of the present application, it comprises:
transmitting a third signaling after the first signaling, the third signaling designating the first cell as a serving cell,
wherein the third signaling is used for cell switch at a protocol layer below an RRC layer.

The present application discloses a first node used in new radio, characterized by comprising:
a first transmitter, serving as a response to any condition in a first condition set being satisfied, triggering a first PHR for a first cell, the first cell waiting to be designated as a serving cell,
wherein the first condition set comprises: since the latest PHR transmission, changes in path loss of at least one first type of signal in the first cell exceed a first threshold, and the first threshold is configurable.

The present application discloses a second node used in new radio, characterized by comprising:
a second receiver, when a second condition set is satisfied, receiving a first PHR MAC CE,
wherein the second condition set comprises at least one PHR being triggered and not cancelled, the at least one PHR comprising a first PHR, the first PHR being triggered for a first cell when any condition in a first condition set is satisfied, and the first cell waiting to be designated as a serving cell; and the first condition set comprises: since the latest PHR transmission, changes in path loss of at least one first type of signal in the first cell exceed a first threshold, and the first threshold is configurable.

The present application discloses a method in a first node used in new radio, characterized by comprising:
receiving a first signaling, the first signaling being used for triggering for transmitting a first random access preamble on a first cell; and
serving as a response to receiving the first signaling, triggering a first PHR for the first cell, the first cell waiting to be designated as a serving cell.

As one embodiment, the above method is applicable to cell switch scenarios triggered by a protocol layer below an RRC layer.

As one embodiment, the above method is applicable to LTM scenarios.

As one embodiment, the above method may transmit a PHR to a network in advance, thereby better ensuring the performance of power control.

As one embodiment, the above method may transmit a PHR to a network in advance to rapidly achieve an uplink transmission after the first cell is designated as a serving cell.

As one embodiment, the above method may transmit a PHR to a network in advance to execute more accurate uplink scheduling after the first cell is designated as a serving cell.

According to one aspect of the present application, it comprises:
serving as a response to a second condition set being satisfied, transmitting a first PHR MAC CE,
wherein the second condition set comprises at least one PHR being triggered and not cancelled, the at least one PHR comprising the first PHR.

According to one aspect of the present application, it comprises:
the first PHR MAC CE comprises at least the latter of a first field and a second field, the first field designating the first cell, and the second field designating a maximum output power value for a first transmission waveform,
wherein the first transmission waveform is one of candidate waveform sets, the candidate waveform sets comprising DFT-S-OFDM and CP-OFDM; and the first transmission waveform is used for an uplink transmission in the first cell.

According to one aspect of the present application, it comprises:
receiving a second signaling, the second signaling being used for configuring the first cell, and the second signaling designating the first transmission waveform.

According to one aspect of the present application, it comprises:
the first node determines the first transmission waveform by itself.

According to one aspect of the present application, it comprises:
receiving a third signaling after the first signaling, the third signaling designating the first cell as a serving cell,
wherein the third signaling is used for cell switch at a protocol layer below an RRC layer.

According to one aspect of the present application, it comprises:
the third signaling designates a timing advance command, the timing advance command being used for maintaining an uplink time alignment of the first cell,
wherein the first random access preamble is used for determining the timing advance command.

As one embodiment, the above method may simultaneously obtain an uplink time alignment with the first cell by carrying a timing advance command in the third signaling, which reduces the interruption time of services.

As one embodiment, the above method may avoid monitoring in the first cell by carrying a timing advance command in the third signaling, which reduces the UE implementation complexity, and reduces the UE cost.

The present application discloses a method in a second node used in new radio, characterized by comprising:
transmitting a first signaling, the first signaling being used for triggering for transmitting a first random access preamble on a first cell, the first signaling being used for triggering a first PHR for the first cell, and the first cell waiting to be designated as a serving cell.

According to one aspect of the present application, it comprises:
when a second condition set is satisfied, receiving a first PHR MAC CE,
wherein the second condition set comprises at least one PHR being triggered and not cancelled, the at least one PHR comprising a first PHR.

According to one aspect of the present application, it comprises:
the first PHR MAC CE comprises at least the latter of a first field and a second field, the first field designating the first cell, and the second field designating a maximum output power value for a first transmission waveform,
wherein the first transmission waveform is one of candidate waveform sets, the candidate waveform sets comprising DFT-S-OFDM and CP-OFDM; and the first transmission waveform is used for an uplink transmission in the first cell.

According to one aspect of the present application, it comprises:
transmitting a second signaling, the second signaling being used for configuring the first cell, and the second signaling designating the first transmission waveform.

According to one aspect of the present application, it comprises:
a sender of the first PHR MAC CE determines the first transmission waveform by itself.

According to one aspect of the present application, it comprises:
transmitting a third signaling after the first signaling, the third signaling designating the first cell as a serving cell,
wherein the third signaling is used for cell switch at a protocol layer below an RRC layer.

According to one aspect of the present application, it comprises:
the third signaling comprises a timing advance command, the timing advance command being used for maintaining an uplink time alignment of the first cell,
wherein the first random access preamble is used for determining the timing advance command.

The present application discloses a first node used in new radio, characterized by comprising:
a first receiver receiving a first signaling, the first signaling being used for triggering for transmitting a first random access preamble on a first cell; and
a first transmitter, serving as a response to receiving the first signaling, triggering a first PHR for a first cell, the first cell waiting to be designated as a serving cell.

The present application discloses a second node used in new radio, characterized by comprising:
a second transmitter transmitting a first signaling, the first signaling being used for triggering for transmitting a first random access preamble on a first cell, the first signaling being used for triggering a first PHR for the first cell, and the first cell waiting to be designated as a serving cell.

### Brief Description of the Drawings

Other features, purposes and advantages of the present application will become more apparent from reading the detailed description of the non-limiting embodiments made with reference to the following drawings:
FIG. 1A shows a signal processing flowchart in a first node according to one embodiment of the present application;
FIG. 1B shows a signal processing flowchart in a first node according to one embodiment of the present application;
FIG. 2 illustrates a schematic diagram of a network architecture according to one embodiment of the present application;
FIG. 3 illustrates a schematic diagram of a radio protocol architecture for a user plane and a control plane according to one embodiment of the present application;
FIG. 4 illustrates a schematic diagram of a hardware module of a communication device according to one embodiment of the present application;
FIG. 5A illustrates a flowchart of a radio signal transmission according to one embodiment of the present application;
FIG. 5B illustrates a flowchart of a radio signal transmission according to one embodiment of the present application;
FIG. 6A illustrates a flowchart of a radio signal transmission according to one embodiment of the present application;
FIG. 6B illustrates a flowchart of a radio signal transmission according to one embodiment of the present application;
FIG. 7 illustrates a schematic diagram of a network structure according to one embodiment of the present application;
FIG. 8A illustrates a structural block diagram of a processing apparatus in a first node according to one embodiment of the present application;
FIG. 8B illustrates a structural block diagram of a processing apparatus in a first node according to one embodiment of the present application;
FIG. 9A illustrates a structural block diagram of a processing apparatus in a second node according to one embodiment of the present application;
FIG. 9B illustrates a structural block diagram of a processing apparatus in a second node according to one embodiment of the present application;
FIG. 10 illustrates a structural block diagram of a processing apparatus in a first node according to one embodiment of the present application; and
FIG. 11 illustrates a structural block diagram of a processing apparatus in a second node according to one embodiment of the present application.

### Detailed Description of Embodiments

The technical solution of the present application will be further described in detail below in conjunction with the drawings. It should be noted that, in the absence of conflicts, embodiments and the features in the embodiments of the present application may be arbitrarily combined with each other.

### Embodiment 1A

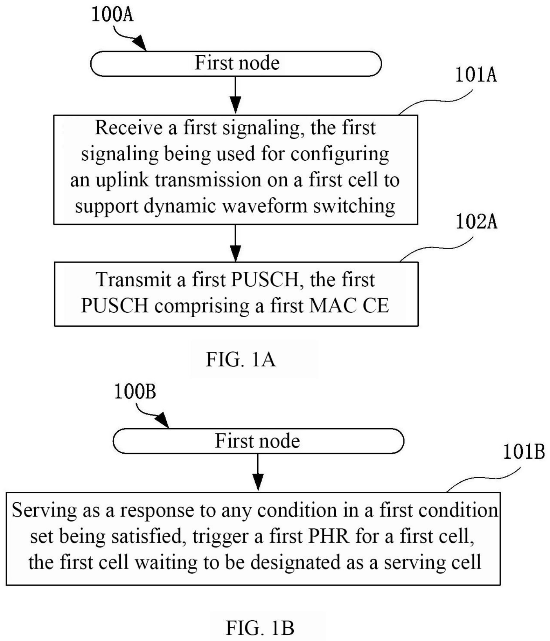

Embodiment 1A illustrates a signal processing flowchart in a first node according to one embodiment of the present application, as shown in FIG. 1A.

In Embodiment 1A, a first node 100A receives a first signaling in step 101A, the first signaling being used for configuring an uplink transmission on a first cell to support dynamic waveform switching; and transmits a first PUSCH in step 102A, the first PUSCH comprising a first MAC CE, wherein the first MAC CE designates a first power value for the first cell, and the first power value is calculated based on a first waveform; whether the first MAC CE designates a second power value for the first cell depends on the first cell, and the second power value is calculated based on a second waveform; and the dynamic waveform switching is between the first waveform and the second waveform.

As one embodiment, a first signaling is received, the first signaling being used for configuring an uplink transmission on a first cell to support dynamic waveform switching.

As one embodiment, the first signaling is a high layer signaling.

As one embodiment, the first signaling is a higher layer signaling.

As one embodiment, the first signaling comprises one MAC (Medium Access Control) CE (Control Element).

As one embodiment, the first signaling is an RRC signaling.

As one embodiment, the first signaling comprises part or all of IEs (Information Elements) in one RRC signaling.

As one embodiment, the first signaling comprises part or all of fields in one IE in one RRC signaling.

As one embodiment, the first signaling belongs to a PUSCH (Physical Uplink Shared Channel)-Config (Configuration) IE (Information Element).

As one embodiment, the first signaling belongs to a BWP (BandWidth Part)-UplinkDedicated IE.

As one embodiment, the first signaling belongs to a BWP-Uplink IE.

As one embodiment, the first signaling belongs to a ServingCellConfig (Serving Cell Configuration) IE.

As one embodiment, the first signaling belongs to a CondRRCReconfig (Conditional RRC Reconfiguration) IE.

As one embodiment, the first signaling belongs to a CandRRCReconfig (Candidate RRC Reconfiguration) IE.

As one embodiment, the first signaling belongs to an ltmCellReconf (LTM Cell Reconfiguration) IE.

As one embodiment, the first signaling comprises one candidate configuration, the candidate configuration comprising a configuration of the first cell, wherein the one candidate configuration is identified by one candidate configuration index.

As one embodiment, the first signaling comprises one reference configuration, the reference configuration comprising a configuration of the first cell, wherein the one reference configuration is identified by one reference configuration index.

As one embodiment, the first signaling comprises one LTM cell configuration, the LTM cell configuration being used for configuring the first cell.

As one embodiment, the first signaling is used for configuring a candidate waveform set of an uplink transmission on a first cell and enabling the uplink transmission to support dynamic waveform switching.

As one embodiment, the first signaling is used for configuring at least one candidate cell, the at least one candidate cell comprising the first cell.

As one embodiment, the first receiver receives a higher layer signaling, the higher layer signaling being used for configuring a candidate waveform set of an uplink transmission on the first cell; and the first signaling enables the uplink transmission on the first cell to support dynamic waveform switching.

As one embodiment, the candidate waveform set comprises the first waveform and the second waveform.

As one embodiment, the candidate waveform set consists of a plurality of candidate waveforms.

As one embodiment, the plurality of candidate waveforms comprise DFT-S-OFDM and CP-OFDM.

As one embodiment, the plurality of candidate waveforms comprise FBMC (Filter Bank Multi Carrier).

As one embodiment, the plurality of candidate waveforms comprise SCMA (Sparse Code Multiple Access).

As one embodiment, the first signaling comprises a first identifier, the first identifier being used for designating the first cell.

As one embodiment, the first identifier is one serving cell index (servCellIndex).

As one embodiment, the first identifier is one candidate cell index (candCellIndex).

As one embodiment, the first identifier is one reference configuration identifier, the reference configuration identifier being used for designating a reference configuration of the first cell.

As one embodiment, the first identifier is one candidate configuration identifier, the candidate configuration identifier being used for designating a candidate configuration of the first cell.

As one embodiment, the first identifier is one cell configuration identifier, the cell configuration identifier being used for designating a configuration of the first cell.

As one embodiment, the first identifier is one LTM cell configuration identifier, the LTM cell configuration identifier being used for designating an LTM configuration of the first cell.

As one embodiment, the first identifier is LTM_CellReConfigID (LTM Cell Reconfiguration Identifier).

As one embodiment, the first signaling designates whether an uplink transmission on the first cell supports dynamic waveform switching through 1 bit; when the 1 bit is set to 0, the uplink transmission on the first cell does not support dynamic waveform switching; and when the 1 bit is set to 1, the uplink transmission on the first cell supports dynamic waveform switching.

As one embodiment, the first signaling designates that an uplink transmission on the first cell supports dynamic waveform switching by setting one enumeration variable to enabled; when the one enumeration variable exists, the uplink transmission on the first cell supports dynamic waveform switching; and when the one enumeration variable does not exist, the uplink transmission on the first cell does not support dynamic waveform switching.

As one sub-embodiment of the above embodiment, the one enumeration variable is that the uplink transmission supports dynamic waveform switching.

As one embodiment, the uplink transmission comprises a PUSCH.

As one embodiment, the uplink transmission comprises a PUCCH (Physical Uplink Control Channel).

As one embodiment, the uplink transmission comprises an SRS (Sounding Reference Signal).

As one embodiment, the uplink transmission comprises a PRACH (Physical Random Access Channel).

As one embodiment, a cell to which the first signaling belongs is the same as the first cell.

As one embodiment, a cell to which the first signaling belongs is different from the first cell.

As one embodiment, the first cell is a servicing cell.

As one embodiment, the first cell is a non-servicing cell.

As one embodiment, the first cell is a candidate cell for cell switch.

As one embodiment, the first cell waits to be designated as a serving cell.

As one embodiment, the first signaling is used for configuring the first cell to wait to be designated as a serving cell.

As one embodiment, a first PUSCH is transmitted, the first PUSCH comprising a first MAC CE.

As one embodiment, the first PUSCH is transmitted on the first cell, wherein the first cell is a serving cell.

As one embodiment, the first PUSCH is transmitted on one cell other than the first cell, wherein the first cell waits to be designated as a serving cell.

As one embodiment, the first MAC CE is a PHR MAC CE.

As one embodiment, the first MAC CE is an enhanced PHR MAC CE.

As one embodiment, the first MAC CE comprises a single entry.

As one embodiment, the first MAC CE comprises multiple entries.

As one embodiment, the first MAC CE comprises only a PHR for the first cell.

As one embodiment, the first MAC CE comprises a PHR for at least one cell in the first cell set, wherein the first cell set comprises the first cell.

As one sub-embodiment of the above embodiment, each cell in the first cell set waits to be designated as a serving cell.

As one sub-embodiment of the above embodiment, each cell in the first cell set is a serving cell.

As one sub-embodiment of the above embodiment, each cell in the first cell set is one of a serving cell or a cell waiting to be designated as a serving cell.

As one embodiment, the first MAC CE does not comprise a first field, wherein the first MAC CE comprises a single entry.

As one embodiment, the first MAC CE comprises the first field, wherein the first MAC CE comprises multiple entries.

As one sub-embodiment of the above embodiment, the first MAC CE comprises a PHR triggered for a plurality of cells.

As one embodiment, the first field designates the first cell.

As one embodiment, the first field comprises a physCellId (physical Cell Identifier), and the physCellID is a physical cell identifier (physical cell ID) of the first cell.

As one embodiment, the first field comprises a candidate configuration index, and a candidate configuration designated by the candidate configuration index is applied to the first cell.

As one embodiment, the first field comprises a reference configuration index, and a reference configuration designated by the reference configuration index is applied to the first cell.

As one embodiment, the first field comprises a candidate cell index, and a candidate cell designated by the candidate cell index is the first cell.

As one embodiment, the first field comprises an LTM cell configuration identifier, and an LTM cell designated by the LTM cell configuration identifier is the first cell.

As one embodiment, the first field is the i-th bit, the i-th bit designates an index of the first cell in a plurality of cells, and when the i-th bit is set to 1, the first PHR MAC CE comprises the first PHR; and when the i-th bit is set to 0, the first PHR MAC CE does not comprise the first PHR.

As one embodiment, values of the candidate configuration index, the candidate cell index, the LTM cell configuration identifier, and i are 0, 1, 2, ..., 7, respectively.

As one embodiment, values of the candidate configuration index, the candidate cell index, the LTM cell configuration identifier, and i are 1, 2, 3, ..., 7, respectively.

As one embodiment, values of the candidate configuration index, the candidate cell index, the LTM cell configuration identifier, and i are 0, 1, 2, ..., 31, respectively.

As one embodiment, values of the candidate configuration index, the candidate cell index, the LTM cell configuration identifier, and i are 1, 2, 3, ..., 31, respectively.

As one embodiment, the first MAC CE designates a first power value for the first cell.

As one embodiment, the first power value is used for an uplink transmission for the first cell.

As one embodiment, the first power value is used for power control of an uplink transmission for the first cell.

As one embodiment, the first power value is obtained from a physical layer of the first node.

As one embodiment, the first power value is obtained according to a reference PUSCH transmission.

As one embodiment, the first MAC CE comprises a first power value for the first cell.

As one embodiment, the first power value is a value of a P_{CMAX,f,c} field.

As one embodiment, P_{CMAX,f,c} is maximum output power.

As one embodiment, P_{CMAX,f,c} is maximum output power of the first node for a carrier f on the first cell c in each slot, f designating the carrier, and c designating the first cell.

As one embodiment, the maximum output power of the first node on the first cell is configured.

As one embodiment, the maximum output power of the first node on the first cell is obtained through calculation.

As one embodiment, the specific calculation method may refer to a TS 38.213 protocol of the 3GPP standard.

As one embodiment, the first node is allowed to set the first power value.

As one embodiment, the first power value is not less than a first minimum power value and not greater than a first maximum power value.

As one embodiment, the first minimum power value and the first maximum power value are obtained through calculation using the configured parameters respectively.

As one embodiment, the first minimum power value and the first maximum power value are respectively related to an uplink transmission waveform.

As one embodiment, the first power value is a value of a PH (Power Headroom) field, the PH designating a power headroom level.

As one embodiment, the power headroom level is obtained based on a maximum output power of the first node on the first cell and actual PUSCH transmission power.

As one embodiment, the power headroom level is a quantized level of a difference obtained by subtracting actual PUSCH transmission power from the maximum output power of the first node on the first cell.

As one embodiment, the specific relationship between the PH and the corresponding power headroom level may refer to a TS 38.321 protocol and a TS 38.133 protocol of the 3GPP standard.

As one embodiment, the first power value is calculated based on a first waveform.

As one embodiment, the first minimum power value and the first maximum power value are respectively related to the first waveform.

As one embodiment, the first waveform is configured by a downlink signaling.

As one embodiment, the first waveform is fixed.

As one embodiment, the first waveform is default.

As one embodiment, the first waveform is designated by the first node through an uplink siganling.

As one embodiment, the first waveform belongs to the candidate waveform set.

As one embodiment, whether the first MAC CE designates a second power value for the first cell depends on the first cell.

As one embodiment, a type of the first cell is used for determining whether the first MAC CE designates the second power value for the first cell.

As one embodiment, a type of the first cell comprises a servicing cell.

As one embodiment, a type of the first cell comprises a candidate cell.

As one embodiment, the candidate cell is used for cell switch.

As one embodiment, the candidate cell is used for cell switch at a protocol layer below an RRC layer.

As one embodiment, the candidate cell is used for CPC.

As one embodiment, the candidate cell is used for CPA.

As one embodiment, the candidate cell is used for CHO.

As one embodiment, a type of the first cell comprises waiting to be designated as a serving cell.

As one embodiment, whether the first cell has available uplink time is used for determining whether the first MAC CE designates the second power value for the first cell, wherein the first cell is a serving cell.

As one embodiment, when the first cell has available uplink time, it is determined that the first MAC CE designates the second power value for the first cell; and when the first cell does not have available uplink time, it is determined that the first MAC CE does not designate the second power value for the first cell.

As one embodiment, the first cell having available uplink time comprises: the first cell is in an activated state.

As one embodiment, the first cell having available uplink time comprises: the first cell is in an active duration of a cell DRX (Discontinuous Reception).

As one embodiment, the first cell having available uplink time comprises: the first cell is in an active duration of a cell DTX (Discontinuous Transmission) and an active duration of a cell DRX simultaneously.

As one embodiment, the first cell having available uplink time comprises: the first cell is configured with at least one UL (Uplink) BWP, and one of the at least one UL BWP is activated.

As one embodiment, the second power value is calculated based on a second waveform.

As one embodiment, the second power value is not less than a second minimum power value and not greater than a second maximum power value, and the second minimum power value and the second maximum power value are respectively related to the second waveform.

As one embodiment, the second waveform is configured by a downlink signaling.

As one embodiment, the second waveform is fixed.

As one embodiment, the second waveform is default.

As one embodiment, the second waveform is designated by the first node through an uplink signaling.

As one embodiment, the second waveform belongs to the candidate waveform set.

As one embodiment, the dynamic waveform switching is between the first waveform and the second waveform.

As one embodiment, the first waveform is CP-OFDM, and the second waveform is DFT-S-OFDM.

As one embodiment, the first waveform is DFT-S-OFDM, and the second waveform is CP-OFDM.

As one embodiment, the first waveform is CP-OFDM, and the second waveform is SCMA.

As one embodiment, the first waveform is DFT-S-OFDM, and the second waveform is SCMA.

As one embodiment, the dynamic waveform switching is at slot granularity.

As one embodiment, the dynamic waveform switching is designated through a dynamic signaling.

As one embodiment, downlink control information (DCI) for scheduling the first PUSCH designates a waveform for transmitting the first PUSCH.

As one sub-embodiment of the above embodiment, the downlink control information comprises at least one of a time-frequency resource occupied by the first PUSCH, an HARQ (Hybrid Automatic Repeat Request) process ID, and a modulation and coding scheme (MCS).

### Embodiment 1B

Embodiment 1B illustrates a signal processing flowchart in a first node according to one embodiment of the present application, as shown in FIG. 1B.

In Embodiment 1B, the first node 100B, serving as a response to any condition in a first condition set being satisfied, triggers a first PHR for a first cell in step 101B, the first cell waiting to be designated as a serving cell, wherein the first condition set comprises: since the latest PHR transmission, changes in path loss of at least one first type of signal in the first cell exceed a first threshold, and the first threshold is configurable.

As one embodiment, serving as a response to any condition in a first condition set being satisfied, a first PHR is triggered for a first cell.

As one embodiment, the first condition set comprises at least one condition.

As one embodiment, the action of triggering a first PHR for a first cell is executed on an MAC (Medium Access Control) sublayer.

As one embodiment, the action of triggering a first PHR for a first cell is related to a capability of the first node.

As one embodiment, the first cell waiting to be designated as a serving cell comprises: the first cell waits to be dynamically designated as a serving cell.

As one embodiment, the first cell waiting to be designated as a serving cell comprises: the first cell waits to be designated as a serving cell by a signaling of a protocol layer below an RRC layer.

As one embodiment, the first cell waiting to be designated as a serving cell comprises: the first cell waits to be designated as a serving cell by DCI (Downlink Control Information).

As one embodiment, the first cell waiting to be designated as a serving cell comprises: the first cell waits to be designated as a serving cell by an MAC CE (Control Element).

As one embodiment, the first cell waiting to be designated as a serving cell comprises: the first cell waits to be designated as a serving cell by an RRC signaling.

As one embodiment, the first cell waiting to be designated as a serving cell comprises: the first cell waits to be designated as a serving cell by the first node.

As one embodiment, the first cell waiting to be designated as a serving cell comprises: the first cell waits to be designated as a serving cell by a network.

As one embodiment, the first cell waiting to be designated as a serving cell comprises: the first cell has not yet been configured with a servCellIndex (serving Cell Index).

As one embodiment, the first cell waiting to be designated as a serving cell comprises: the first cell is a candidate cell.

As one embodiment, the first cell waiting to be designated as a serving cell comprises: the first cell is configured with a candidate cell identifier.

As one embodiment, the first cell waiting to be designated as a serving cell comprises: the first cell is configured with a reference configuration.

As one embodiment, the first cell waiting to be designated as a serving cell comprises: the first cell is configured with a reference configuration index.

As one embodiment, the first cell waiting to be designated as a serving cell comprises: the first cell is configured with a candidate configuration.

As one embodiment, the first cell waiting to be designated as a serving cell comprises: the first cell is configured with a candidate configuration index.

As one embodiment, one candidate configuration index is used for designating one candidate configuration.

As one embodiment, the first cell waiting to be designated as a serving cell comprises: the first cell is configured with an LTM candidate identifier (LTM candidate ID).

As one embodiment, the first cell waiting to be designated as a serving cell comprises: the first cell is configured.

As one embodiment, the first cell waiting to be designated as a serving cell comprises: the first cell is configured as a candidate cell and has not yet received a command for cell switch to the first cell.

As one embodiment, the candidate cell is used for cell switch.

As one embodiment, the candidate cell is used for cell switch at a protocol layer below an RRC layer.

As one embodiment, the candidate cell is used for CPC.

As one embodiment, the candidate cell is used for CPA.

As one embodiment, the candidate cell is used for CHO.

As one embodiment, the first cell waiting to be designated as a serving cell comprises: the first cell is a non-serving cell.

As one embodiment, the first cell waiting to be designated as a serving cell comprises: the first cell is configured with a candidate configuration index and has not yet received a command for cell switch to the first cell.

As one embodiment, the first node is configured with an MCG (Master Cell Group), and the first cell does not belong to the MCG.

As one embodiment, the first node is configured with an MCG and an SCG (Secondary Cell Group), and the first cell belongs to neither the MCG nor the SCG.

As one embodiment, the first node is configured with a first cell set.

As one embodiment, the first cell set comprises the first cell, and each cell in the first cell set waits to be designated as a serving cell.

As one embodiment, the first condition set comprises: since the latest PHR transmission, changes in path loss of at least one first type of signal in the first cell exceed a first threshold.

As one embodiment, an absolute value of a difference between a path loss of at least one first type of signal in the first cell since latest PHR transmission and a current path loss of at least one first type of signal in the first cell exceeds the first threshold.

As one embodiment, a path loss of at least one first type of signal in the first cell since latest PHR transmission is greater than a current path loss of at least one first type of signal in the first cell by the first threshold.

As one embodiment, a path loss of at least one first type of signal in the first cell since latest PHR transmission is less than a current path loss of at least one first type of signal in the first cell by the first threshold.

As one embodiment, the latest transmitted PHR is carried in one MAC CE.

As one embodiment, the latest transmitted PHR is carried in a PHR MAC CE.

As one embodiment, the latest transmitted PHR comprises only a PHR for the first cell.

As one embodiment, the latest transmitted PHR comprises only a PHR for at least one cell in the first cell set, wherein the first cell set comprises the first cell, and each cell in the first cell set waits to be designated as a serving cell.

As one embodiment, the latest transmitted PHR comprises at least one of a PHR for a serving cell of the first node and a PHR for the first cell.

As one embodiment, the latest transmitted PHR comprises at least one of a PHR for a serving cell of the first node and a PHR for any cell comprised in the first cell set, wherein the first cell set comprises the first cell, and each cell in the first cell set waits to be designated as a serving cell.

As one embodiment, the latest transmitted PHR is transmitted through an MAC entity associated with an MCG.

As one embodiment, the at least one first type of signal of the first cell is used for a pathloss reference of the first cell.

As one embodiment, the first type of signal is configured by a network.

As one embodiment, the first type of signal is UE-specific.

As one embodiment, the first type of signal is broadcast.

As one embodiment, the first type of signal is an RS (Reference Signal).

As one embodiment, the first type of signal is a CSI (Channel Status Information)-RS.

As one embodiment, the first type of signal is a CRS (Cell-specific Reference Signal).

As one embodiment, the first type of signal is a PRS (Positioning Reference Signal).

As one embodiment, the first type of signal is an SSB (Synchronization Signal Block).

As one embodiment, the first type of signal is an SSB (SS/PBCH Block, Synchronization Signal/Physical Broadcast Channel Block).

As one embodiment, the first cell comprises at least one DL (DownLink) BWP (BandWidth Part).

As one embodiment, the first cell comprises at least one UL (UpLink) BWP.

As one embodiment, the first threshold is configurable.

As one embodiment, the first threshold is configured by a network.

As one embodiment, the first threshold is phr-Tx-PowerFactorChange (power headroom reporting-Transmit-Power Factor Change) dB (decibel).

As one embodiment, since the latest PHR transmission, a first timer is initiated.

As one embodiment, initiating a first timer comprises: starting or re-starting a first timer.

As one embodiment, the first timer is initiated after each PHR transmission.

As one embodiment, the first timer expires or has expired.

As one embodiment, the first timer is in a running state after being initiated.

As one embodiment, when the first timer is running, the first timer is updated at each time interval.

As one embodiment, an initial value of the first timer is 0, and the phrase "updating the first timer" is to add 1 to a value of the first timer; and when the value of the first timer is an expiration value of the first timer, the first timer expires.

As one embodiment, an initial value of the first timer is an expiration value of the first timer, and the phrase "updating the first timer" is to subtract 1 from a value of the first timer; and when the value of the first timer is 0, the first timer expires.

As one embodiment, the one time interval is 1 millisecond.

As one embodiment, the one time interval is a duration comprised in 1 slot.

As one embodiment, the one time interval is a duration comprised in 1 subframe.

As one embodiment, the expiration value of the first timer is configurable.

As one embodiment, the expiration value of the first timer is configured by a network.

As one embodiment, the second signaling in the present application is used for configuring the expiration value of the first timer.

As one embodiment, the first timer stops running after expiring.

As one embodiment, the first timer is a PHR-ProhibitTimer (Prohibit Timer).

As one embodiment, only when the first timer expires or has expired, and since the latest PHR transmission, changes in path loss of at least one first type of signal in the first cell exceed the first threshold, the first PHR is triggered for the first cell.

As one embodiment, the above method may prevent frequent PHR triggering from causing a waste of uplink resources and interfering with normal communication of UE.

As one embodiment, the first condition set comprises: receiving a second signaling in the present application, the second signaling being used for configuring or reconfiguring a power headroom reporting functionality of the first cell.

As one embodiment, the second signaling comprises at least part of fields in a PHR-Config (Configuration) IE (Information element).

As one embodiment, the second signaling comprises a phr-PeriodicTimer (Periodic Timer).

As one embodiment, the second signaling comprises an mpe (Maximum Permissible Exposure)-Threshold.

As one embodiment, the second signaling is used for configuring the first timer.

### Embodiment 2

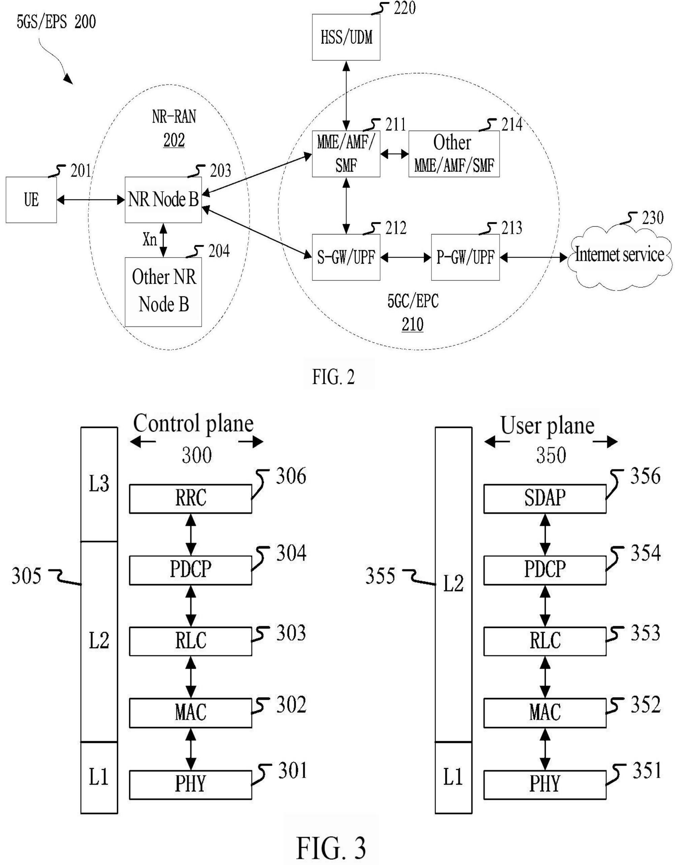

Embodiment 2 illustrates a schematic diagram of a network architecture according to one embodiment of the present application, as shown in FIG. 2. FIG. 2 illustrates a diagram of a network architecture 200 of NR 5G, LTE (Long-Term Evolution) and LTE-A (Long-Term Evolution Advanced) systems. The NR 5G, LTE or LTE-A network architecture 200 may be referred to as a 5GS (5G System)/EPS (Evolved Packet System) 200 or some other suitable terminologies. The 5GS/EPS 200 may comprise one or more pieces of UE (User Equipment) 201, an NG-RAN (Next Generation Radio Access Network) 202, a 5GC (5G Core Network)/EPC (Evolved Packet Core) 210, an HSS (Home Subscriber Server)/UDM (Unified Data Management) 220, and an Internet service 230. The 5GS/EPS may be interconnected with other access networks, but these entities/interfaces are not shown for simplicity. As shown in figures, the 5GS/EPS provides packet switching services, however, those skilled in the art will readily appreciate that the various concepts presented throughout the present application may be extended to networks providing circuit switching services or other cellular networks. The NG-RAN comprises an NR node B (gNB) 203 and other gNB204. The gNB203 provides user and control plane protocol terminations toward the UE201. The gNB203 may be connected to other gNB204 via an Xn interface (e.g., backhaul). The gNB203 may also be referred to as a base station, a base transceiving station, a radio base station, a radio transceiving device, a transceiving device function, a basic service set (BSS), an extended service set (ESS), a TRP (Transmission Reception Point), or some other suitable terminologies, and in an NTN (Non Terrestrial Network), the gNB203 may be a satellite, an aircraft, or a terrestrial base station relayed through a satellite. The gNB203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a vehicle-mounted device, a vehicle-mounted communication unit, a wearable device, or any other similarly functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the 5GC/EPC210 through an S1/NG interface. The 5GC/EPC210 comprises an MME (Mobility Management Entity)/AMF (Authentication Management Field)/SMF (Session Management Function) 211, other MMEs/AMFs/SMFs214, an S-GW (Service Gateway)/UPF (User Plane Function) 212, and a P-GW (Packet Data Network Gateway)/UPF213. The MME/AMF/SMF211 is a control node that processes a signaling between the UE201 and the 5GC/EPC210. Generally, the MME/AMF/SMF211 provides bearer and connection management. All user IP (Internet Protocol) packets are transmitted through the S-GW/UPF212, the S-GW/UPF212 being itself connected to the P-GW/UPF213. The P-GW provides UE IP address allocation and other functions. The P-GW/UPF213 is connected to the Internet service 230. The Internet service 230 comprises operator-corresponding Internet Protocol services, which may specifically comprise the Internet, an intranet, an IMS (IP Multimedia Subsystem), and a PS (Packet Switching) streaming service.

As one embodiment, the UE201 corresponds to a first node in the present application.

As one embodiment, the NR node B203 corresponds to a second node in the present application.

As one embodiment, the gNB203 is a Macro Cell base station.

As one embodiment, the gNB203 is a Micro Cell base station.

As one embodiment, the gNB203 is a Pico Cell base station.

As one embodiment, the gNB203 is a Femtocell.

As one embodiment, the gNB203 is a base station device supporting a large-latency difference.

As one embodiment, the gNB203 is one flying platform device.

As one embodiment, the gNB203 is a satellite device.

As one embodiment, the gNB203 is a test device (such as a transceiving apparatus that simulates some functions of a base station, and a signaling tester).

As one embodiment, the gNB204 is a Macro Cell base station.

As one embodiment, the gNB204 is a Micro Cell base station.

As one embodiment, the gNB204 is a Pico Cell base station.

As one embodiment, the gNB204 is a Femtocell.

As one embodiment, the gNB204 is a base station device supporting a large-latency difference.

As one embodiment, the gNB204 is one flying platform device.

As one embodiment, the gNB204 is a satellite device.

As one embodiment, the gNB204 is a test device (such as a transceiving apparatus that simulates some functions of a base station, and a signaling tester).

As one embodiment, a radio link from the UE201 to the gNB203/the gNB204 is an uplink, the uplink being used for executing an uplink transmission.

As one embodiment, a radio link from the gNB203/the gNB204 to the UE201 is a downlink, the downlink being used for executing a downlink transmission.

As one embodiment, the UE201 and the gNB203/the gNB204 are connected through a Uu interface respectively.

### Embodiment 3

Embodiment 3 illustrates a schematic diagram of a radio protocol architecture for a user plane and a control plane according to one embodiment of the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 for UE and gNBs using three layers: a Layer 1, a Layer 2, and a Layer 3. The Layer 1 (L1 layer) is the lowest layer and implements various PHY (Physical Layer) signal processing functions. The L1 layer will be referred to as a PHY301 herein. The Layer 2 (L2 layer) 305 is above the PHY301 and is responsible for a link between UE and gNBs through the PHY301. The L2 layer 305 comprises an MAC (Medium Access Control) sublayer 302, an RLC (Radio Link Control) sublayer 303, and a PDCP (Packet Data Convergence Protocol) sublayer 304, these sublayers terminating at the gNB of a network side. The PDCP sublayer 304 provides data encryption and integrity protection, and the PDCP sublayer 304 also provides handover support of UE between gNBs. The RLC sublayer 303 provides data packet segmentation and reassembly, and retransmits lost data packets through an ARQ. The RLC sublayer 303 also provides duplicate data packet detection and protocol error detection. The MAC sublayer 302 provides mapping between a logical channel and a transmission channel and multiplexing of a logical channel identifier. The MAC sublayer 302 is also responsible for allocating various radio resources (e.g., resource blocks) in one cell between UE. The MAC sublayer 302 is also responsible for HARQ (Hybrid Automatic Repeat Request) operations. An RRC (Radio Resource Control) sublayer 306 in the Layer 3 (L3 layer) in the control plane 300 is responsible for obtaining radio resources (i.e., radio bearers) and configuring lower layers using an RRC signaling between a gNB and UE. Although not shown in the figure, a V2X layer may also be provided above the RRC sublayer 306 in the control plane 300 of the UE. The V2X layer is responsible for generating a PC5 QoS parameter group and QoS rules according to received service data or service requests, generating one PC5 QoS flow corresponding to the PC5 QoS parameter group, and transmitting a PC5 QoS flow identifier and the corresponding PC5 QoS parameter group to an AS (Access Stratum) layer for the AS layer to perform QoS processing on data packets belonging to the PC5 QoS flow identifier. The V2X layer also comprises a PC5-S protocol (PC5-Signaling Protocol) sublayer. The V2X layer is responsible for designating the AS layer whether each transmission is a PC5-S transmission or a V2X service data transmission. The radio protocol architecture for the user plane 350 comprises a Layer 1 (L1 layer) and a Layer 2 (L2 layer). The radio protocol architecture in the user plane 350 is substantially the same as those of the corresponding layers and sublayers in the control plane 300 for a physical layer 351, a PDCP sublayer 354 in the L2 layer 355, an RLC sublayer 353 in the L2 layer 355, and an MAC sublayer 352 in the L2 layer 355, but the PDCP sublayer 354 also provides header compression for the upper-layer data packets to reduce radio transmission overhead. The L2 355 in the user plane 350 also comprises an SDAP (Service Data Adaptation Protocol) sublayer 356, the SDAP sublayer 356 being responsible for mapping between QoS (Quality of Service) flows and data radio bearers (DRBs) to support the diversity of services. The radio protocol architecture of the UE in the user plane 350 may comprise part or all of protocol sublayers of the SDAP sublayer 356, the PDCP sublayer 354, the RLC sublayer 353 and the MAC sublayer 352 in the L2 layer. Although not shown in the figure, the UE may have several upper layers above the L2 layer 355, comprising a network layer (e.g., an IP layer) terminating at the P-GW on the network side and an application layer terminating at the other end of a connection (e.g., remote UE and a server).

As one embodiment, the radio protocol architecture in FIG. 3 is applicable to a first node in the present application.

As one embodiment, the radio protocol architecture in FIG. 3 is applicable to a second node in the present application.

As one embodiment, the first signaling in the present application is generated at the RRC306.

As one embodiment, the first signaling in the present application is generated at the MAC302 or the MAC352.

As one embodiment, the first signaling in the present application is generated at the PHY301 or the PHY351.

As one embodiment, the first PUSCH in the present application is generated at the PHY301 or the PHY351.

As one embodiment, the second signaling in the present application is generated at the MAC302 or the MAC352.

As one embodiment, the second signaling in the present application is generated at the PHY301 or the PHY351.

As one embodiment, the third signaling in the present application is generated at the MAC302 or the MAC352.

As one embodiment, the first random access preamble in the present application is generated at the PHY301 or the PHY351.

As one embodiment, the first PHR in the present application is generated at the MAC302 or the MAC352.

As one embodiment, the first PHR MAC CE in the present application is generated at the MAC302 or the MAC352.

As one embodiment, the UL grant DCI in the present application is generated at the PHY301 or the PHY351.

As one embodiment, the L2 layer 305 or 355 belongs to a higher layer.

As one embodiment, an RRC sublayer 306 in the L3 layer belongs to a higher layer.

### Embodiment 4

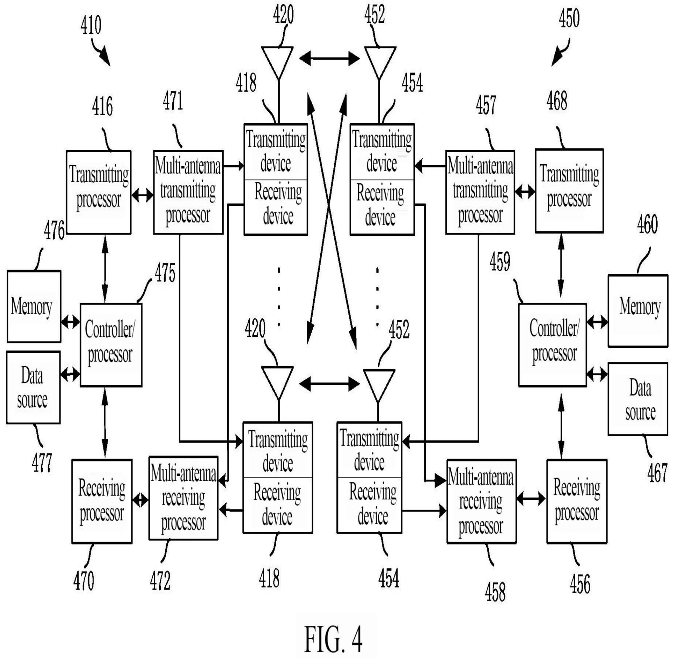

Embodiment 4 illustrates a schematic diagram of a hardware module of a communication device according to one embodiment of the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a data resource 477, a receiving processor 470, a transmitting processor 416, a multi-antenna receiving processor 472, a multi-antenna transmitting processor 471, a transmitting device/receiving device 418, and an antenna 420.

In a transmission from the second communication device 410 to the first communication device 450, at the second communication device 410, upper-layer data packets from a core network or upper-layer data packets from the data source 477 are provided to the controller/processor 475. The core network and the data source 477 represent all protocol layers above an L2 layer. The controller/processor 475 implements the functionality of the L2 layer. In the transmission from the second communication device 410 to the first communication device 450, the controller/processor 475 provides header compression, encryption, packet segmentation and reordering, multiplexing between logical and transmission channels, and radio resource allocation to the first communication device 450 based on various priority metrics. The controller/processor 475 is also responsible for retransmission of lost packets and signalings to the first communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 410, as well as mapping of signal constellations based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on the coded and modulated symbols to generate one or more spatial streams. The transmitting processor 416 then maps each spatial stream to a subcarrier, multiplexes the each spatial stream with a reference signal (e.g., pilot frequency) in a time domain and/or frequency domain, and then uses an inverse fast Fourier transform (IFFT) to produce a physical channel carrying a time-domain multi-carrier symbol stream. The multi-antenna transmitting processor 471 then performs a transmitting analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In the transmission from the second communication device 410 to the first communication device 450, at the first communication device 450, each receiving device 454 receives a signal through a corresponding antenna 452 thereof. Each receiving device 454 recovers information modulated onto a radio frequency carrier, and converts the radio frequency stream into a baseband multi-carrier symbol stream and provides the baseband multi-carrier symbol stream to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream from a time domain to a frequency domain after the receiving analog precoding/beamforming operation. In the frequency domain, a physical layer data signal and a reference signal are demultiplexed by the receiving processor 456, wherein the reference signal will be used for channel estimation, and the data signal is subjected to multi-antenna detection in the multi-antenna receiving processor 458 to recover any spatial stream destined for the first communication device 450. The symbols on each spatial stream are demodulated and recovered in the receiving processor 456, and soft decisions are generated. The receiving processor 456 then decodes and deinterleaves the soft decisions to recover upper-layer data and control signals transmitted by the second communication device 410 on the physical channel. The upper-layer data and the control signals are then provided to the controller/processor 459. The controller/processor 459 implements the functions of the L2 layer. The controller/processor 459 may be associated with the memory 460 storing program codes and data. The memory 460 may be referred to as a computer-readable medium. In the transmission from the second communication device 410 to the first communication device 450, the controller/processor 459 provides demultiplexing between transmission and logical channels, packet reassembly, decryption, header decompression, and control signal processing to recover upper-layer data packets from the second communication device 410. The upper-layer data packets are then provided to all protocol layers above the L2 layer. Various control signals may also be provided to an L3 for L3 processing.

In a transmission from the first communication device 450 to the second communication device 410, at the first communication device 450, the upper-layer data packets are provided to the controller/processor 459 using the data source 467. The data source 467 represents all protocol layers above the L2 layer. Similar to the transmitting function at the second communication device 410 described in the transmission from the second communication device 410 to the first communication device 450, the controller/processor 459 implements header compression, encryption, packet segmentation and reordering, and multiplexing between logical and transmission channels, and implements the functions of the L2 layer for the user plane and the control plane. The controller/processor 459 is also responsible for retransmission of lost packets and signalings to the second communication device 410. The transmitting processor 468 executes modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the produced spatial stream into a multi-carrier/single-carrier symbol stream, which is provided to different antennas 452 via the transmitting device 454 after undergoing analog precoding/beamforming operations in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In the transmission from the first communication device 450 to the second communication device 410, the function at the second communication device 410 is similar to the receiving function at the first communication device 450 described in the transmission from the second communication device 410 to the first communication device 450. Each receiving device 418 receives a radio frequency signal through a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 storing program codes and data. The memory 476 may be referred to as a computer-readable medium. In the transmission from the first communication device 450 to the second communication device 410, the controller/processor 475 provides demultiplexing between transmission and logical channels, packet reassembly, decryption, header decompression, and control signal processing to recover upper-layer data packets from the first communication device 450. The upper-layer data packets from the controller/processor 475 may be provided to the core network or all protocol layers above the L2 layer, and various control signals may also be provided to the core network or the L3 for L3 processing.

As one embodiment, the first communication device 450 apparatus comprises: at least one processor and at least one memory, the at least one memory comprising a computer program code; and the at least one memory and the computer program code being configured to be used with the at least one processor; and the first communication device 450 apparatus at least: receives a first signaling, the first signaling being used for configuring an uplink transmission on a first cell to support dynamic waveform switching; transmits a first PUSCH, the first PUSCH comprising a first MAC CE, wherein the first MAC CE designates a first power value for the first cell, and the first power value is calculated based on a first waveform; whether the first MAC CE designates a second power value for the first cell depends on the first cell, and the second power value is calculated based on a second waveform; and the dynamic waveform switching is between the first waveform and the second waveform; and transmits a first random access preamble.

As one embodiment, the first communication device 450 apparatus comprises: a memory storing a computer-readable instruction program, the computer-readable instruction program generating actions when executed by at least one processor, and the actions comprising: receiving a first signaling, the first signaling being used for configuring an uplink transmission on a first cell to support dynamic waveform switching; transmitting a first PUSCH, the first PUSCH comprising a first MAC CE, wherein the first MAC CE designates a first power value for the first cell, and the first power value is calculated based on a first waveform; whether the first MAC CE designates a second power value for the first cell depends on the first cell, and the second power value is calculated based on a second waveform; and the dynamic waveform switching is between the first waveform and the second waveform; and transmitting a first random access preamble.

As one embodiment, the first communication device 450 apparatus comprises: at least one processor and at least one memory, the at least one memory comprising a computer program code; and the at least one memory and the computer program code being configured to be used together with the at least one processor; and the first communication device 450 apparatus at least: serving as a response to any condition in a first condition set being satisfied, triggers a first PHR for a first cell, the first cell waiting to be designated as a serving cell, wherein the first condition set comprises: since the latest PHR transmission, changes in path loss of at least one first type of signal in the first cell exceed a first threshold, and the first threshold is configurable.

As one embodiment, the first communication device 450 apparatus comprises: a memory storing a computer-readable instruction program, the computer-readable instruction program generating actions when executed by at least one processor, and the actions comprising: serving as a response to any condition in a first condition set being satisfied, triggering a first PHR for a first cell, the first cell waiting to be designated as a serving cell, wherein the first condition set comprises: since the latest PHR transmission, changes in path loss of at least one first type of signal in the first cell exceed a first threshold, and the first threshold is configurable.

As one embodiment, the second communication device 410 apparatus comprises: at least one processor and at least one memory, the at least one memory comprising a computer program code; and the at least one memory and the computer program code being configured to be used together with the at least one processor. The second communication device 410 apparatus at least: transmits a first signaling, the first signaling being used for configuring an uplink transmission on a first cell to support dynamic waveform switching; and receives a first PUSCH, the first PUSCH comprising a first MAC CE, wherein the first MAC CE designates a first power value for the first cell, and the first power value is calculated based on a first waveform; whether the first MAC CE designates a second power value for the first cell depends on the first cell, and the second power value is calculated based on a second waveform; and the dynamic waveform switching is between the first waveform and the second waveform.

As one embodiment, the second communication device 410 apparatus comprises: a memory storing a computer-readable instruction program, the computer-readable instruction program generating actions when executed by at least one processor, and the actions comprising: transmitting a first signaling, the first signaling being used for configuring an uplink transmission on a first cell to support dynamic waveform switching; and receiving a first PUSCH, the first PUSCH comprising a first MAC CE, wherein the first MAC CE designates a first power value for the first cell, and the first power value is calculated based on a first waveform; whether the first MAC CE designates a second power value for the first cell depends on the first cell, and the second power value is calculated based on a second waveform; and the dynamic waveform switching is between the first waveform and the second waveform.

As one embodiment, the second communication device 410 apparatus comprises: at least one processor and at least one memory, the at least one memory comprising a computer program code; and the at least one memory and the computer program code being configured to be used together with the at least one processor. The second communication device 410 apparatus at least: when a second condition set is satisfied, receives a first PHR MAC CE, wherein the second condition set comprises at least one PHR being triggered and not cancelled, the at least one PHR comprising a first PHR, the first PHR being triggered for a first cell when any condition in a first condition set is satisfied, and the first cell waiting to be designated as a serving cell; and the first condition set comprises: since the latest PHR transmission, changes in path loss of at least one first type of signal in the first cell exceed a first threshold, and the first threshold is configurable.

As one embodiment, the second communication device 410 apparatus comprises: a memory storing a computer-readable instruction program, the computer-readable instruction program generating actions when executed by at least one processor, and the actions comprising: when a second condition is satisfied, receiving a first PHR MAC CE, wherein the second condition set comprises at least one PHR being triggered and not cancelled, the at least one PHR comprising a first PHR, the first PHR being triggered for a first cell when any condition in a first condition set is satisfied, and the first cell waiting to be designated as a serving cell; and the first condition set comprises: since the latest PHR transmission, changes in path loss of at least one first type of signal in the first cell exceed a first threshold, and the first threshold is configurable.

As one embodiment, the second communication device 410 apparatus comprises: at least one processor and at least one memory, the at least one memory comprising a computer program code; and the at least one memory and the computer program code being configured to be used together with the at least one processor. The second communication device 410 apparatus at least: receives a first random access preamble.

As one embodiment, the second communication device 410 apparatus comprises: a memory storing a computer-readable instruction program, the computer-readable instruction program generating actions when executed by at least one processor, and the actions comprising: receiving a first random access preamble.

As one embodiment, the first communication device 450 apparatus comprises: at least one processor and at least one memory, the at least one memory comprising a computer program code; and the at least one memory and the computer program code being configured to be used with the at least one processor; and the first communication device 450 apparatus at least: receives a first signaling, the first signaling being used for triggering for transmitting a first random access preamble on a first cell; and serving as a response to receiving the first signaling, triggers a first PHR for the first cell, the first cell waiting to be designated as a serving cell.

As one embodiment, the first communication device 450 apparatus comprises: a memory storing a computer-readable instruction program, the computer-readable instruction program generating actions when executed by at least one processor, and the actions comprising: receiving a first signaling, the first signaling being used for triggering for transmitting a first random access preamble on a first cell; and serving as a response to receiving the first signaling, triggering a first PHR for the first cell, the first cell waiting to be designated as a serving cell.

As one embodiment, the second communication device 410 apparatus comprises: at least one processor and at least one memory, the at least one memory comprising a computer program code; and the at least one memory and the computer program code being configured to be used together with the at least one processor. The second communication device 410 apparatus at least: transmits a first signaling, the first signaling being used for triggering for transmitting a first random access preamble on a first cell, the first signaling being used for triggering a first PHR for the first cell, and the first cell waiting to be designated as a serving cell.

As one embodiment, the second communication device 410 apparatus comprises: a memory storing a computer-readable instruction program, the computer-readable instruction program generating actions when executed by at least one processor, and the action comprising: transmitting a first signaling, the first signaling being used for transmitting a first random access preamble in a first cell, the first signaling being used for triggering a first PHR for the first cell, and the first cell waiting to be designated as a serving cell.

As one embodiment, the first communication device 450 corresponds to a first node in the present application, and the second communication device 410 corresponds to a second node in the present application.

As one embodiment, the first communication device 450 corresponds to a first node in the present application, and the second communication device 410 corresponds to a third node in the present application.

As one embodiment, the first communication device 450 is one piece of UE.

As one embodiment, the first communication device 450 is one relay.

As one embodiment, the second communication device 410 is one piece of UE.

As one embodiment, the second communication device 410 is one base station device.

As one embodiment, the second communication device 410 is a distribution unit of one base station.

As one embodiment, at least one of the antenna 420, the transmitting device 418, the multi-antenna transmitting processor 471, the transmitting processor 416, or the controller/processor 475 is used for transmitting a first signaling in the present application.

As one embodiment, at least one of the antenna 452, the receiving device 454, the multi-antenna receiving processor 458, the receiving processor 456, or the controller/processor 459 is used for receiving a first signaling in the present application.

As one embodiment, at least one of the antenna 452, the transmitting device 454, the multi-antenna transmitting processor 457, the transmitting processor 468, or the controller/processor 459 is used for transmitting a first PUSCH in the present application.

As one embodiment, at least one of the antenna 420, the receiving device 418, the multi-antenna receiving processor 472, the receiving processor 470, or the controller/processor 475 is used for receiving a first PUSCH in the present application.

As one embodiment, at least one of the antenna 420, the transmitting device 418, the multi-antenna transmitting processor 471, the transmitting processor 416, or the controller/processor 475 is used for transmitting a second signaling in the present application.

As one embodiment, at least one of the antenna 452, the receiving device 454, the multi-antenna receiving processor 458, the receiving processor 456, or the controller/processor 459 is used for receiving a second signaling in the present application.

As one embodiment, at least one of the antenna 452, the transmitting device 454, the multi-antenna transmitting processor 457, the transmitting processor 468, or the controller/processor 459 is used for triggering a first PHR in the present application.

As one embodiment, at least one of the antenna 452, the transmitting device 454, the multi-antenna transmitting processor 457, the transmitting processor 468, or the controller/processor 459 is used for transmitting a first random access preamble in the present application.

As one embodiment, at least one of the antenna 420, the receiving device 418, the multi-antenna receiving processor 472, the receiving processor 470, or the controller/processor 475 is used for receiving a first random access preamble in the present application.

As one embodiment, at least one of the antenna 420, the transmitting device 418, the multi-antenna transmitting processor 471, the transmitting processor 416, or the controller/processor 475 is used for transmitting a third signaling in the present application.

As one embodiment, at least one of the antenna 452, the receiving device 454, the multi-antenna receiving processor 458, the receiving processor 456, or the controller/processor 459 is used for receiving a third signaling in the present application.

As one embodiment, at least one of the antenna 452, the transmitting device 454, the multi-antenna transmitting processor 457, the transmitting processor 468, or the controller/processor 459 is used for transmitting a first PHR MAC CE in the present application.

As one embodiment, at least one of the antenna 420, the receiving device 418, the multi-antenna receiving processor 472, the receiving processor 470, or the controller/processor 475 is used for receiving a first PHR MAC CE in the present application.

### Embodiment 5A

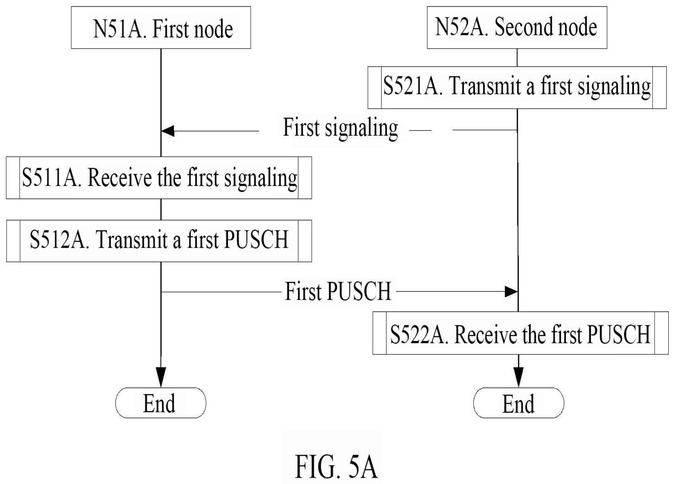

Embodiment 5A illustrates a flowchart of a radio signal transmission according to one embodiment of the present application, as shown in FIG. 5A. In FIG. 5A, a first node N51A and a second node N52A are communicated through a radio interface.

For **the first node N51A**, a first signaling is received in step S511A; and a first PUSCH is transmitted in step S512A.

For **the second node N52A,** a first signaling is transmitted in step S521A; and a first PUSCH is received in step S522A.

In Embodiment 5A, a first signaling is received, the first signaling being used for configuring an uplink transmission on a first cell to support dynamic waveform switching; a first PUSCH is transmitted, the first PUSCH comprising a first MAC CE, wherein the first MAC CE designates a first power value for the first cell, and the first power value is calculated based on a first waveform; whether the first MAC CE designates a second power value for the first cell depends on the first cell, and the second power value is calculated based on a second waveform; and the dynamic waveform switching is between the first waveform and the second waveform; and according to the configuration of the first signaling, at least one UL grant DCI format used for scheduling the first cell comprises 1 bit, the 1 bit designating one waveform from the first waveform and the second waveform; and whether the first MAC CE designates a second power value for the first cell depending on the first cell comprises: when the first cell is a serving cell, the first MAC CE designates the second power value for the first cell.

As one embodiment, the second node N52A is a maintenance base station of a serving cell of the first node N51A.

As one embodiment, the second node N52A is a transmit/ receive point (TRP) of a serving cell of the first node N51A.

As one embodiment, the second node N52A is a maintenance base station of a master cell group (MCG) of the first node N51A.

As one embodiment, the second node N52A is a maintenance base station of a secondary cell group (SCG) of the first node N51A.

As one embodiment, the second node N52A is an MgNB (Master gNB).

As one embodiment, the second node N52A is an SgNB (Secondary gNB).

As one embodiment, the second node N52A is a maintenance base station of the first cell.

As one embodiment, the second node N52A is not a maintenance base station of the first cell.

As one embodiment, according to the configuration of the first signaling, at least one UL grant DCI format used for scheduling the first cell comprises 1 bit, the 1 bit designating one waveform from the first waveform and the second waveform.

As one embodiment, the at least one UL grant is used for a PUSCH on the first cell.

As one embodiment, the 1 bit comprised in the at least one UL grant DCI format explicitly designates the first waveform or the second waveform.

As one embodiment, an uplink transmission waveform configured on the first cell by the first signaling is dynamically switched, and the first node N51 determines whether a transmission waveform for a PUSCH scheduled by the UL grant is the first waveform or the second waveform according to the designating of the 1 bit comprised in a UL grant DCI format.

As one embodiment, DCI formats of the at least one piece of UL grant DCI used for scheduling the first cell comprise DCI format 0_0 and DCI format 0_1.

As one embodiment, DCI formats of the at least one piece of UL grant DCI used for scheduling the first cell comprise DCI format 0_2.

The above method can increase the switching frequency of transmission waveforms to better adapt to a transmission environment.

As one embodiment, DCI formats of the at least one piece of UL grant DCI used for scheduling the first cell comprise DCI format 0_0, and do not comprise DCI format 0_1 and DCI format 0_2.

The above method improves the robustness of scheduling a transmission waveform.

As one embodiment, whether the first MAC CE designates a second power value for the first cell depending on the first cell comprises: when the first cell is a serving cell, the first MAC CE designates the second power value for the first cell.

As one sub-embodiment of the above embodiment, the first cell is a PCell (Primary Cell).

As one sub-embodiment of the above embodiment, the first cell is a PSCell (Primary SCG Cell).

As one sub-embodiment of the above embodiment, the first cell is an SCell (Secondary Cell).

As one sub-embodiment of the above embodiment, the first cell is activated.

As one sub-embodiment of the above embodiment, the first cell is in an active duration of a cell DRX.

As one sub-embodiment of the above embodiment, the first cell is in an active duration of a cell DTX.

As one sub-embodiment of the above embodiment, the first cell is in an active duration of a cell DTX and in an active duration of a cell DRX.

As one sub-embodiment of the above embodiment, at least one UL BWP is configured on the first cell, and one of the at least one UL BWP is activated.

As one sub-embodiment of the above embodiment, the first cell comprises an activated UL BWP.

As one embodiment, when the first cell is a serving cell, the first MAC CE does not designate the second power value for the first cell.

As one sub-embodiment of the above embodiment, the first cell is not activated.

As one sub-embodiment of the above embodiment, the first cell is in a non-active duration of a cell DTX.

As one sub-embodiment of the above embodiment, the first cell is in a non-active duration of a cell DRX.

As one sub-embodiment of the above embodiment, the first cell is in a non-active duration of a cell DTX and in a non-active duration of a cell DRX.

As one sub-embodiment of the above embodiment, at least one UL BWP is configured on the first cell, and all UL BWPs in the at least one UL BWP are not activated.

As one sub-embodiment of the above embodiment, the first cell does not comprise an activated UL BWP.

As one embodiment, the first MAC CE is identified through one logical channel identity (LCID).

As one embodiment, a codepoint of the one logical channel identifier (LCID) is a positive integer between 37 and 42, inclusive.

As one embodiment, a codepoint of the one logical channel identifier (LCID) is a positive integer between 0 and 228, inclusive.

As one embodiment, when any condition in a first condition set is satisfied, a first PHR is triggered for the first cell.

As one embodiment, the first condition set comprises: receiving the first signaling.

As one embodiment, the first condition set comprises: the first timer expires or has expired, and since the latest PHR transmission, changes in path loss of at least one first type of signal in the first cell exceed the first threshold.

As one embodiment, the first condition set comprises: the first timer expires or has expired, and since the latest PHR transmission, changes in path loss of at least one first type of signal in an activated serving cell of an any MAC entity of the first node exceed the first threshold, and an active DL (Downlink) BWP is not a dormant BWP.

As one embodiment, the first condition set comprises: a phr-PeriodicTimer (Periodic Timer) expires.

As one embodiment, the first condition set comprises: SCG activation.

As one embodiment, the first condition set comprises: adding a PSCell unless an SCG is deactivated.

As one embodiment, the first type of signal is configured by a network.

As one embodiment, the first type of signal is UE-specific.

As one embodiment, the first type of signal is broadcast.

As one embodiment, the first type of signal is an RS (Reference Signal).

As one embodiment, the first type of signal is a CSI (Channel State Information)-RS.

As one embodiment, the first type of signal is a CRS (Cell-specific Reference Signal).

As one embodiment, the first type of signal is a PRS (Positioning Reference Signal).

As one embodiment, the first type of signal is an SSB (Synchronization Signal Block).

As one embodiment, the first type of signal is an SSB (SS/PBCH Block, Synchronization Signal/Physical Broadcast Channel Block).

As one embodiment, the first cell comprises at least one DL BWP.

As one embodiment, the first cell comprises at least one UL BWP.

As one embodiment, the first threshold is configurable.

As one embodiment, the first threshold is configured by a network.

As one embodiment, the first threshold is phr-Tx-PowerFactorChange (power headroom reporting-Transmit-Power Factor Change) dB (decibel).

As one embodiment, since the latest PHR transmission, the first timer is initiated.

As one embodiment, initiating a first timer comprises: starting or re-starting a first timer.

As one embodiment, the first timer is initiated after each PHR transmission.

As one embodiment, the expiration value of the first timer is configurable.

As one embodiment, the first timer is a PHR-ProhibitTimer (Prohibit Timer).

As one embodiment, the first PUSCH is transmitted, the first PUSCH comprising the first MAC CE.

As one sub-embodiment of the above embodiment, at least one PHR is triggered and not cancelled, the at least one PHR comprising the first PHR.

As one sub-embodiment of the above embodiment, serving as a result of logical channel prioritization (LCP), an allocated uplink resource can accommodate the first MAC CE and a subheader.

As one embodiment, any PHR in the at least one PHR is triggered for the first cell.

As one embodiment, any PHR in the at least one PHR is triggered for one cell in the first cell set.

As one embodiment, the at least one PHR comprises a PHR triggered for a cell other than the first cell, wherein the at least one PHR comprises a plurality of PHRs.

As one sub-embodiment of the above embodiment, a cell other than the first cell comprises a serving cell of the first node.

As one embodiment, after transmitting the first MAC CE, all triggered PHR(s) are cancelled.

### Embodiment 5B

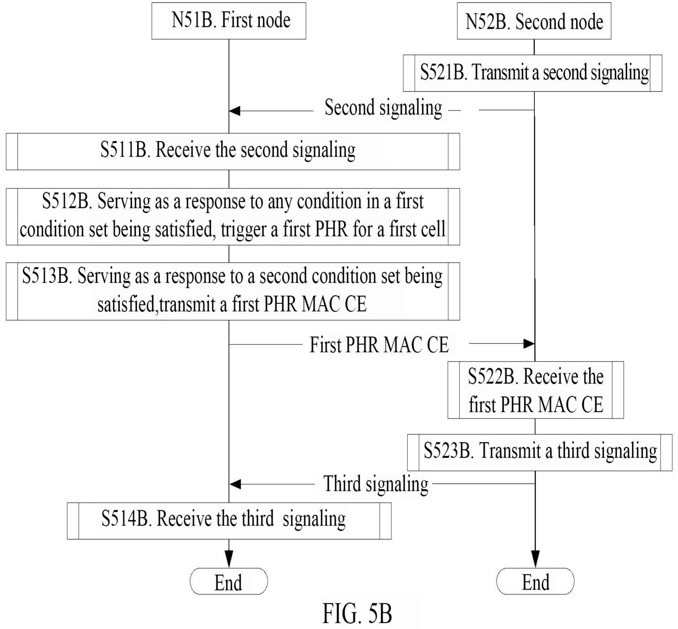

Embodiment 5B illustrates a flowchart of a radio signal transmission according to one embodiment of the present application, as shown in FIG. 5B. In FIG. 5B, a first node N51B and a second node N52B are communicated through a radio interface. It should be particularly noted that the order in this example does not limit the signal transmission order and implementation order in the present application.

For **the first node N51B,** a second signaling is received in step S511B; serving as a response to any condition in a first condition set being satisfied, a first PHR is triggered for a first cell in step S512B; serving as a response to a second condition set being satisfied, a first PHR MAC CE is transmitted in step S513B; and a third signaling is received in step S514B.

For **the second node N52B,** a second signaling is transmitted in step S521B; a first PHR MAC CE is received in step S522B; and a third signaling is transmitted in step S523B.

In Embodiment 5B, serving as a response to any condition in a first condition set being satisfied, a first PHR is triggered for a first cell, the first cell waiting to be designated as a serving cell, wherein the first condition set comprises: since the latest PHR transmission, changes in path loss of at least one first type of signal in the first cell exceed a first threshold, and the first threshold is configurable; serving as a response to a second condition set being satisfied, a first PHR MAC CE is transmitted, wherein the second condition set comprises at least one PHR being triggered and not cancelled, the at least one PHR comprising the first PHR; the first PHR MAC CE comprises at least the latter of a first field and a second field, the first field designating the first cell, and the second field designating a maximum output power value for a first transmission waveform, wherein the first transmission waveform is one of candidate waveform sets, the candidate waveform sets comprising DFT-S-OFDM and CP-OFDM; and the first transmission waveform is used for an uplink transmission of the first cell; a second signaling is received, the second signaling being used for configuring the first cell, and the second signaling designating the first transmission waveform; and the first node determining the first transmission waveform by itself; and a third signaling is received, the third signaling designating the first cell as a serving cell, wherein the third signaling is used for cell switch at a protocol layer below an RRC layer.

As one embodiment, the second node N52B is a maintenance base station of a serving cell of the first node N51B.

As one embodiment, the second node N52B is a transmit/ receive point (TRP) of a serving cell of the first node N51B.

As one embodiment, the second node N52B is a maintenance base station of a master cell group (MCG) of the first node N51B.

As one embodiment, the second node N52B is a maintenance base station of a secondary cell group (SCG) of the first node N51B.

As one embodiment, the second node N52B is an MgNB (Master gNB).

As one embodiment, the second node N52B is an SgNB (Secondary gNB).

As one embodiment, a second signaling is received, the second signaling being used for configuring the first cell.

As one embodiment, the second signaling is a high layer signaling.

As one embodiment, the second signaling is an RRC signaling.

As one embodiment, the second signaling is RRCReconfiguration (RRC Reconfiguration).

As one embodiment, the second signaling is a CondRRCReconfig (Conditional RRC Reconfiguration).

As one embodiment, the second signaling is a CandRRCReconfig (Candidate RRC Reconfiguration).

As one embodiment, the second signaling is an ltmCellReconfig (LTM Cell Reconfiguration).

As one embodiment, the second signaling comprises all or part of IEs (Information Elements) in one RRC signaling.

As one embodiment, the second signaling comprises all or part of fields in one IE in one RRC signaling.

As one embodiment, the second signaling comprises one candidate configuration, the candidate configuration comprising a configuration of the first cell, wherein the one candidate configuration is identified by one candidate configuration index.

As one embodiment, the second signaling comprises one reference configuration, the reference configuration comprising a configuration of the first cell, wherein the one reference configuration is identified by one candidate configuration index.

As one embodiment, the second signaling comprises an LTM_CellReConfigId (LTM Cell Reconfiguration Identifier), the LTM_CellReConfigId being used for designating a configuration of the first cell.

As one embodiment, the second signaling is used for configuring an air interface resource of the first cell.

As one embodiment, the second signaling is used for configuring the first type of signal of the first cell, the first type of signal being UE-specific.

As one embodiment, the second signaling is used for configuring a resource for executing a random access process on the first cell.

As one embodiment, the second signaling is used for configuring a C-RNTI (Cell-Radio Network Temporary Identifier), the C-RNTI being used for uniquely identifying the first node in the first cell.

As one embodiment, the second signaling is used for configuring at least one candidate cell, the at least one candidate cell comprising the first cell.

As one embodiment, after receiving the second signaling, serving as a response to any condition in a first condition set being satisfied, a first PHR is triggered for the first cell, the first cell waiting to be designated as a serving cell.

As one embodiment, serving as a response to a second condition set being satisfied, a first PHR MAC CE is transmitted.

As one embodiment, serving as a response to all conditions in a second condition set being satisfied, a first PHR MAC CE is transmitted.

As one embodiment, the first PHR MAC CE is a single-entry PHR MAC CE.

As one embodiment, the first PHR MAC CE is a multiple-entry PHR MAC CE.

As one embodiment, the action of transmitting a first PHR MAC CE comprises: passing the generated first PHR MAC CE from an MAC layer to a physical layer.

As one embodiment, transmitting a first PHR MAC CE comprises a value of power headroom (PH) of at least one cell that is obtained from a physical layer.

As one embodiment, transmitting a first PHR MAC CE comprises obtaining a value of a P_{CMAX,f,c} field of at least one cell from a physical layer, P_{CMAX,f,c} being maximum output power of the first node on the at least one cell, wherein c designates the one cell, and f designates a carrier frequency.

As one embodiment, transmitting a first PHR MAC CE comprises a value of an MPE (Maximum Permissible Exposure) field of at least one cell that is obtained from a physical layer.

As one sub-embodiment of the above three embodiments, the at least one cell comprises the first cell.

As one sub-embodiment of the above three embodiments, the at least one cell comprises a cell in the first cell set.

As one sub-embodiment of the above three embodiments, the at least one cell comprises a serving cell of the first node.

As one embodiment, the first PHR MAC CE is transmitted through an MAC entity associated with an MCG.

As one embodiment, the second condition set comprises: at least one PHR is triggered and not cancelled, the at least one PHR comprising the first PHR.

As one embodiment, any PHR in the at least one PHR is triggered for the first cell.

As one embodiment, any PHR in the at least one PHR is triggered for one cell in the first cell set.

As one embodiment, the at least one PHR comprises a PHR triggered for a cell other than the first cell, wherein the at least one PHR comprises a plurality of PHRs.

As one sub-embodiment of the above embodiment, a cell other than the first cell comprises a serving cell of the first node.

As one embodiment, the second condition set comprises: serving as a result of logical channel prioritization (LCP), an allocated uplink resource can accommodate an MAC CE for a PHR and a subheader.

As one embodiment, after transmitting the first PHR MAC CE, all triggered PHR(s) are cancelled.

As one embodiment, the first PHR MAC CE comprises at least the latter of a first field and a second field, the first field designating the first cell, and the second field designating a maximum output power value for a first transmission waveform.

As one embodiment, the first PHR MAC CE comprises a second field and does not comprise a first field, wherein the first PHR MAC CE is a single-entry PHR MAC CE.

As one sub-embodiment of the above embodiment, the first PHR MAC CE is identified through a first logical channel identity (LCID).

As one sub-embodiment of the above embodiment, the first node is only configured with the first cell.

As one sub-embodiment of the above embodiment, the first PHR MAC CE comprises only the first PHR.

As one embodiment, the first PHR MAC CE comprises a first field and a second field, wherein the first PHR MAC CE is one of a single-entry PHR MAC CE or a multi-entry PHR MAC CE.

As one sub-embodiment of the above embodiment, the first PHR MAC CE comprises a PHR triggered for a plurality of cells.

As one embodiment, the first field designates the first cell.

As one embodiment, the first field comprises a physCellId (physical Cell Identifier), and the physCellID is a physical cell identifier (physical cell ID) of the first cell.

As one embodiment, the first field comprises a candidate configuration index, and a candidate configuration designated by the candidate configuration index is applied to the first cell.

As one embodiment, the first field comprises a reference configuration index, and a reference configuration designated by the reference configuration index is applied to the first cell.

As one embodiment, the first field comprises a candidate cell index, and a candidate cell designated by the candidate cell index is the first cell.

As one embodiment, the first field is the i-th bit, the i-th bit designates an index of the first cell in a plurality of cells, and when the i-th bit is set to 1, the first PHR MAC CE comprises the first PHR; and when the i-th bit is set to 0, the first PHR MAC CE does not comprise the first PHR.

As one embodiment, values of the candidate configuration index, the candidate cell index, and i are 0, 1, 2, ...7, respectively.

As one embodiment, values of the candidate configuration index, the candidate cell index, and i are 1, 2, 3, ...7, respectively.

As one embodiment, values of the candidate configuration index, the candidate cell index, and i are 0, 1, 2, ..., 31, respectively.

As one embodiment, values of the candidate configuration index, the candidate cell index, and i are 1, 2, 3, ..., 31, respectively.

As one embodiment, the second field is P_{CMAX,f,c}, and the second field designates a maximum output power value for a first transmission waveform.

As one embodiment, a value of the second field is obtained from a physical layer.

As one embodiment, a value of the second field is obtained according to a reference PUSCH transmission.

As one embodiment, the first transmission waveform is used for an uplink transmission of the first cell.

As one embodiment, an uplink transmission of the first cell is a PUSCH.

As one embodiment, an uplink transmission of the first cell is a PUCCH (Physical Uplink Control Channel).

As one embodiment, an uplink transmission of the first cell is an SRS (Sounding Reference Signal).

As one embodiment, the first PHR MAC CE comprises a third field, the third field being PH (Power Headroom), and the third field designating power headroom for the first cell.

As one embodiment, the second field is used for calculating the third field.

As one embodiment, the first PHR MAC CE comprises a fourth field, the fourth field being MPE, and the fourth field designating a power backoff value applied for the first cell to meet MPE requirements.

As one embodiment, the fourth field is for the first transmission waveform.

As one embodiment, the first transmission waveform is one of candidate waveform sets, the candidate waveform sets comprising DFT-S-OFDM (Discrete Fourier Transform-Spread-OFDM) and CP-OFDM (Cyclic Prefix Orthogonal Frequency Division Multiplexing).

As one embodiment, the candidate waveform set consists of DFT-S-OFDM and CP-OFDM.

As one embodiment, the candidate waveform set consists of a plurality of candidate waveforms.

As one embodiment, the plurality of candidate waveforms comprise DFT-S-OFDM and CP-OFDM.

As one embodiment, the plurality of candidate waveforms comprise FBMC (Filter Bank Multi Carrier).

As one embodiment, the plurality of candidate waveforms comprise SCMA (Sparse Code Multiple Access).

As one embodiment, the first transmission waveform is pre-configured.

As one embodiment, the first transmission waveform is default.

As one embodiment, the first transmission waveform is configurable by a network.

As one embodiment, the second signaling designates the first transmission waveform.

As one embodiment, the first transmission waveform is the recommended by the first node.

As one embodiment, the first node determines the first transmission waveform by itself.

As one embodiment, the first PHR MAC CE comprises a fifth field, the fifth field designating the first transmission waveform.

As one embodiment, a third signaling is received, the third signaling designating the first cell as a serving cell.

As one embodiment, the third signaling is used for cell switch at a protocol layer below an RRC layer.

As one embodiment, the third signaling designates cell switch to the first cell.

As one embodiment, the third signaling is a signaling of a protocol layer below an RRC sublayer.

As one embodiment, the third signaling is a physical layer signaling.

As one embodiment, the third signaling is a PDCCH.

As one embodiment, the third signaling is an MAC sublayer signaling.

As one embodiment, the third signaling is an MAC CE.

As one embodiment, the third signaling is a cell switch signaling.

As one embodiment, the name of the third signaling comprises LTM (L1/L2-Triggered Mobility).

As one embodiment, the name of the third signaling comprises change.

As one embodiment, the name of the third signaling comprises switch.

As one embodiment, the third signaling is LTM cell switch.

As one embodiment, the third signaling comprises one cell identifier, the one cell identifier being used for identifying the first cell.

As one embodiment, the third signaling comprises one reference configuration index, and a reference configuration designated by the reference configuration index comprises the first cell.

As one embodiment, the third signaling comprises one candidate configuration index, and a candidate configuration designated by the candidate configuration index comprises the first cell.

As one embodiment, the third signaling comprises an LTM_CellReConfigId, the LTM_CellReConfigId designating the first cell.

As one embodiment, the third signaling comprises one index, the index designating, in ascending order, at least one RRC reconfiguration message for LTM that is comprised in one candidate configuration, wherein the at least one RRC reconfiguration message for LTM comprises an RRC reconfiguration message of the first cell.

As one embodiment, the first cell waiting to be designated as a serving cell comprises: waiting to receive the third signaling.

As one embodiment, the first cell waiting to be designated as a serving cell comprises: having received the second signaling and not yet having received the third signaling.

As one embodiment, transmitting of the second signaling and transmitting of the third signaling are implemented by a network.

As one embodiment, the third signaling comprises a timing advance command, the timing advance command being applied to the first cell.

As one embodiment, the third signaling comprises an absolute timing advance command, the absolute timing advance command being applied to the first cell.

As one embodiment, the third signaling designates a timing advance value, the timing advance value being applied to the first cell.

As one embodiment, the timing advance command is used for maintaining uplink time alignment of the first cell.

As one embodiment, serving as a response to receiving the timing advance command, a TimeAlignmentTimer is initiated, the TimeAlignmentTimer being associated with one timing advance group (TAG), and the timing advance group comprising at least the first cell; when the TimeAlignmentTimer is running, it is considered that cells comprised in the timing advance group associated with the TimeAlignmentTimer have uplink time alignment; and when the TimeAlignmentTimer expires, it is considered that cells comprised in the timing advance group associated with the TimeAlignmentTimer are out of uplink time alignment.

As one embodiment, the first receiver receives a third signaling, the third signaling designating the first cell as a serving cell, wherein the third signaling is used for cell switch at an RRC layer.

As one embodiment, the third signaling is an RRC reconfiguration (cell switch) signaling.

As one embodiment, the third signaling is reconfigurationWithSync (reconfiguration With Synchronization).

As one embodiment, the third signaling belongs to an SpCellConfig (Special Cell Configuration).

As one embodiment, the third signaling belongs to a CellGroupConfig (Cell Group Configuration) IE.

As one embodiment, serving as a response to receiving the third signaling, a first signal is transmitted on the first cell, wherein the first signal is used for designating successful cell switch.

As one embodiment, the first signal implicitly designates successful cell switch.

As one embodiment, the first signal is a physical layer signal.

As one embodiment, the first signal is a scheduling request (SR).

As one embodiment, the first signal is HARQ (Hybrid Automatic Repeat Request)-ACK (ACKnowledgement, qued1).

As one embodiment, the first signal is ACK (ACKnowledgement).

As one embodiment, the first signal is a reference signal (RS).

As one embodiment, the first signal is UCI (Uplink Control Information).

As one embodiment, the first signal explicitly designates successful cell switch.

As one embodiment, the first signal comprises one MAC sublayer message.

As one embodiment, the one MAC sublayer message is one MAC CE.

As one embodiment, a logical channel identifier (LCID) of the one MAC CE is a positive integer between 35 and 46, inclusive.

As one embodiment, the one MAC CE comprises 0 bit.

As one embodiment, the first signal comprises an LTM cell switch confirmation message.

As one embodiment, the first signal comprises a C-RNTI (Cell-Radio Network Temporary Identifier), the C-RNTI uniquely identifying the first node in the first cell.

As one embodiment, the first signal comprises a BSR (Buffer Status Report).

As one embodiment, the first signal comprises one RRC sublayer message.

As one embodiment, the first signal comprises an RRCReconfigurationComplete message.

As one embodiment, the second signaling is used for configuring an air interface resource occupied by the first signal.

### Embodiment 6A

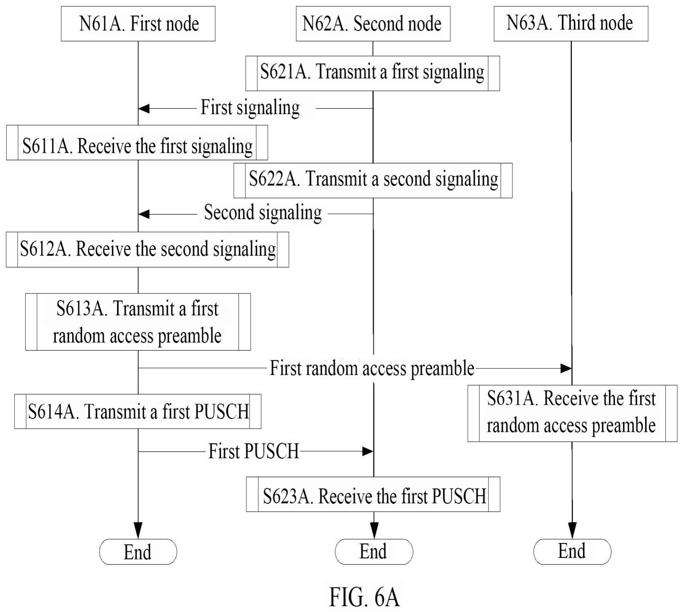

Embodiment 6A illustrates a flowchart of a radio signal transmission according to one embodiment of the present application, as shown in FIG. 6A. In FIG. 6A, the first node N61A and the second node N62A are communicated through a radio interface; and the first node N61A and the third node N63A are communicated through a radio interface. It should be particularly noted that the order in this example does not limit the signal transmission order and implementation order in the present application.

For **the first node N61A,** a first signaling is received in step S611A; a second signaling is received in step S612A; a first random access preamble is transmitted in step S613A; and a first PUSCH is transmitted in step S614A.

For **the second node N62A,** a first signaling is transmitted in step S621A; a second signaling is transmitted in step S622A; and a first PUSCH is received in step S623A.

For **the third node N63A,** a first random access preamble is received in step S631A.

In Embodiment 6A, a first signaling is received, the first signaling being used for configuring an uplink transmission on a first cell to support dynamic waveform switching; a first PUSCH is transmitted, the first PUSCH comprising a first MAC CE, wherein the first MAC CE designates a first power value for the first cell, and the first power value is calculated based on a first waveform; whether the first MAC CE designates a second power value for the first cell depends on the first cell, and the second power value is calculated based on a second waveform; and the dynamic waveform switching is between the first waveform and the second waveform; and whether the first MAC CE designates a second power value for the first cell depending on the first cell comprises: when the first cell waits to be designated as a serving cell, the first MAC CE does not designate the second power value for the first cell; whether the first MAC CE designates a second power value for the first cell depending on the first cell comprises: when the first cell waits to be designated as a serving cell, whether the first MAC CE designates the second power value for the first cell is related to resources allocated to the first PUSCH; when the first cell waits to be designated as a serving cell, the first waveform is determined by the first node itself, wherein the first MAC CE comprises 1 bit, the 1 bit designating the first waveform; a second signaling is received, the second signaling being used for triggering for transmitting a first random access preamble on the first cell; and serving as a response to receiving the second signaling, a first PHR is triggered for the first cell, wherein at least the first PHR is used for generating the first MAC CE; and the first cell waits to be designated as a serving cell.

It should be noted that the execution order of steps S613A and S614A may be interchanged, i.e., step S613A may be executed after step S614A.

As one embodiment, the second node N62A and the third node N63A are co-located.

As one embodiment, the second node N62A and the third node N63A are the same gNB-DU (Distributed Unit).

As one embodiment, the second node N62A and the third node N63A are the same gNB-CU (Central Unit).

As one embodiment, the second node N62A and the third node N63A are different nodes.

As one embodiment, the second node N62A and the third node N63A are different gNB-DUs.

As one embodiment, the second node N62A and the third node N63A are different gNB-CUs.

As one embodiment, the second node N62A is a base station of a serving cell of the first node.

As one embodiment, the second node N62A is a transmit/ receive point of a serving cell of the first node.

As one embodiment, the third node N63A is a base station of the first cell.

As one embodiment, the third node N63A is a transmit/ receive point of the first cell.

As one embodiment, the second node N62A and the third node N63A are connected through ideal backhaul.

As one embodiment, the second node N62A and the third node N63A are connected through non-ideal backhaul.

As one embodiment, the first node N61A and the second node N62A are communicated through a cell to which the first signaling belongs; the first node N61A and the third node N63A are communicated through the first cell; and the cell to which the first signaling belongs is different from the first cell.

As one embodiment, a cell to which the first signaling belongs is a serving cell, and the first cell waits to be designated as a serving cell.

As one embodiment, a second signaling is received, the second signaling being used for triggering for transmitting a first random access preamble on the first cell.

As one embodiment, the first transmitter, serving as a response to receiving the second signaling, transmits the first random access preamble on the first cell.

As one embodiment, the second signaling is a physical layer signaling.

As one embodiment, the second signaling is a PDCCH (Physical Downlink Control Channel) order.

As one embodiment, the second signaling is an enhanced PDCCH order.

As one embodiment, the second signaling designates the first cell.

As one embodiment, the second signaling designates the first random access preamble.

As one embodiment, the first random access preamble is used for determining a timing advance command.

As one embodiment, the first random access preamble is one signature sequence.

As one embodiment, the first random access preamble is one Gold sequence.

As one embodiment, the first random access preamble is one M sequence.

As one embodiment, the first random access preamble is one ZC (Zadoff-Chu) sequence.

As one embodiment, the first random access preamble is reserved to the first cell.

As one embodiment, the first random access preamble is contention-free.

As one embodiment, a resource designated by the second signaling for transmitting the first random access preamble is transmitted to the second node N62A and transmitted to the first node through the second node N62A after being allocated by the third node N63A.

As one embodiment, an air interface resource designated by the second signaling for transmitting the first random access preamble is an air interface resource on the first cell.

As one embodiment, the second signaling is used for initiating a random access process, the random access process comprising transmitting the first random access preamble.

As one embodiment, the second signaling is only used for triggering for transmitting the first random access preamble, and the second signaling is not used for initiating a random access process.

As one sub-embodiment of the above embodiment, after transmitting the first random access preamble, the first node does not monitor a random access response on the first cell.

As one embodiment, serving as a response to receiving the second signaling, a first PHR is triggered for the first cell.

As one embodiment, the first condition set comprises: receiving the second signaling.

As one embodiment, the action of triggering a first PHR for a first cell is executed on an MAC sublayer.

As one embodiment, the action of triggering a first PHR for a first cell is related to a capability of the first node.

As one embodiment, the first cell waiting to be designated as a serving cell comprises: the first cell waits to be dynamically designated as a serving cell.

As one embodiment, the first cell waiting to be designated as a serving cell comprises: the first cell waits to be designated as a serving cell by a signaling of a protocol layer below an RRC layer.

As one embodiment, the first cell waiting to be designated as a serving cell comprises: the first cell waits to be designated as a serving cell by DCI (Downlink Control Information).

As one embodiment, the first cell waiting to be designated as a serving cell comprises: the first cell waits to be designated as a serving cell by an MAC CE (Control Element).

As one embodiment, the first cell waiting to be designated as a serving cell comprises: the first cell waits to be designated as a serving cell by an RRC signaling.

As one embodiment, the first cell waiting to be designated as a serving cell comprises: the first cell waits to be designated as a serving cell by the first node.

As one embodiment, the first cell waiting to be designated as a serving cell comprises: the first cell waits to be designated as a serving cell by a network.

As one embodiment, the first cell waiting to be designated as a serving cell comprises: the first cell has not yet been configured with a servCellIndex (serving Cell Index).

As one embodiment, the first cell waiting to be designated as a serving cell comprises: the first cell is a candidate cell.

As one embodiment, the first cell waiting to be designated as a serving cell comprises: the first cell is configured as a candidate cell.

As one embodiment, the first cell waiting to be designated as a serving cell comprises: the first cell is configured with a reference configuration.

As one embodiment, the first cell waiting to be designated as a serving cell comprises: the first cell is configured with a candidate configuration.

As one embodiment, the first cell waiting to be designated as a serving cell comprises: the first cell is configured with a conditional configuration.

As one embodiment, the first cell waiting to be designated as a serving cell comprises: the first cell is configured as an LTM cell.

As one embodiment, the first cell waiting to be designated as a serving cell comprises: the first cell is configured with an LTM cell reconfiguration.

As one embodiment, the first cell waiting to be designated as a serving cell comprises: the first cell is configured as a candidate cell and has not yet received a command for cell switch to the first cell.

As one embodiment, the first cell waiting to be designated as a serving cell comprises: the first cell is configured with an LTM cell reconfiguration and has not yet received a command for cell switch to the first cell.

As one embodiment, the first cell waiting to be designated as a serving cell comprises: the first cell is configured with a candidate configuration and has not yet received a command for cell switch to the first cell.

As one embodiment, the first cell waiting to be designated as a serving cell comprises: the first cell is configured with a condition configuration and has not yet received a command for cell switch to the first cell.

As one embodiment, the first cell waiting to be designated as a serving cell comprises: the first cell is a non-serving cell.

As one embodiment, at least the first PHR is used for generating the first MAC CE.

As one embodiment, at least the first PHR being used for generating the first MAC CE comprises: obtaining at least the first power value for the first cell from a physical layer.

As one embodiment, at least the first PHR being used for generating the first MAC CE comprises: obtaining at least a value of power headroom (PH) for the first cell from a physical layer.

As one embodiment, at least the first PHR being used for generating the first MAC CE comprises: obtaining at least a value of an MPE (Maximum Permissible Exposure) field for the first cell from a physical layer.

As one embodiment, whether the first MAC CE designates a second power value for the first cell depending on the first cell comprises: when the first cell waits to be designated as a serving cell, the first MAC CE does not designate the second power value for the first cell.

As one embodiment, when the first cell waits to be designated as a serving cell, the first waveform is configured by the first signaling.

As one embodiment, when the first cell waits to be designated as a serving cell, the first waveform is default.

As one embodiment, when the first cell waits to be designated as a serving cell, the first waveform is fixed.

As one embodiment, whether the first MAC CE designates a second power value for the first cell depending on the first cell comprises: when the first cell waits to be designated as a serving cell, whether the first MAC CE designates the second power value for the first cell is related to resources allocated to the first PUSCH.

As one embodiment, when resources allocated to the first PUSCH can accommodate the first MAC CE plus a subheader, the first MAC CE designates the second power value for the first cell, wherein the first cell waits to be designated as a serving cell.

As one embodiment, when resources allocated to the first PUSCH cannot accommodate the first MAC CE plus a subheader, the first MAC CE does not designate the second power value for the first cell, wherein the first cell waits to be designated as a serving cell.

As one embodiment, whether the first MAC CE comprises the second waveform is designated through a logic channel identifier.

As one embodiment, different logic channel identifiers are allocated to the first MAC CE comprising the second waveform and the first MAC CE not comprising the second waveform.

As one embodiment, when the first cell waits to be designated as a serving cell, the first waveform is determined by the first node itself.

As one embodiment, determination of the first waveform is UE implementation-related.

As one sub-embodiment of the above two embodiments, the first MAC CE does not designate the second power value for the first cell.

As one embodiment, a subheader of the first MAC CE comprise 1 bit, the 1 bit being used for designating the first waveform.

As one embodiment, a subheader of the first MAC CE comprises 1 bit for a power value of each waveform for the first cell, the 1 bit being used for designating a waveform corresponding to the power value.

As one embodiment, the first waveform is DFT-S-OFDM.

As one embodiment, the first waveform is CP-OFDM.

As one embodiment, the first waveform is FBMC.

As one embodiment, the first waveform is SCMA.

As one embodiment, the first receiver receives a third signaling, the third signaling designating the first cell as a serving cell.

As one embodiment, the third signaling designates cell switch to the first cell.

As one embodiment, the third signaling is a signaling of a protocol layer below an RRC sublayer.

As one embodiment, the third signaling is an MAC sublayer signaling.

As one embodiment, the third signaling is an MAC CE.

As one embodiment, the name of the third signaling comprises LTM (L1/L2-triggered mobility).

As one embodiment, the name of the third signaling comprises switch.

As one embodiment, the third signaling is LTM cell switch.

As one embodiment, the third signaling comprises one cell identifier, the one cell identifier being used for identifying the first cell.

As one embodiment, the third signaling comprises an LTM_CellReConfigId, the LTM_CellReConfigId designating the first cell.

As one embodiment, the first cell waiting to be designated as a serving cell comprises: waiting to receive the third signaling.

As one embodiment, the first cell waiting to be designated as a serving cell comprises: having received the first signaling and not yet having received the third signaling, wherein the first signaling is used for configuring that the first cell waits to be designated as a serving cell.

As one embodiment, the first cell waiting to be designated as a serving cell comprises: having received the second signaling and not yet having received the third signaling, wherein the first signaling is used for configuring that the first cell waits to be designated as a serving cell.

As one embodiment, transmitting of the first signaling, transmitting of the second signaling, and transmitting of the third signaling are implemented by a network.

As one embodiment, the third signaling comprises a timing advance command, the timing advance command being applied to the first cell, wherein the first random access preamble is used for generating the timing advance command.

As one embodiment, the third signaling is used for cell switch of an RRC layer.

As one embodiment, the third signaling is an RRC reconfiguration signaling.

As one embodiment, the third signaling is reconfigurationWithSync (reconfiguration With Synchronization).

As one embodiment, the third signaling belongs to an SpCellConfig (Special Cell Configuration).

As one embodiment, the third signaling belongs to a CellGroupConfig (Cell Group Configuration) IE.

As one embodiment, after receiving the third signaling, the first node transmits one uplink signal on the first cell to designate successful cell switch; and after the one uplink signal, an MAC CE generated by a PHR comprises both the first power value for the first waveform and the second power value for the second waveform.

### Embodiment 6B

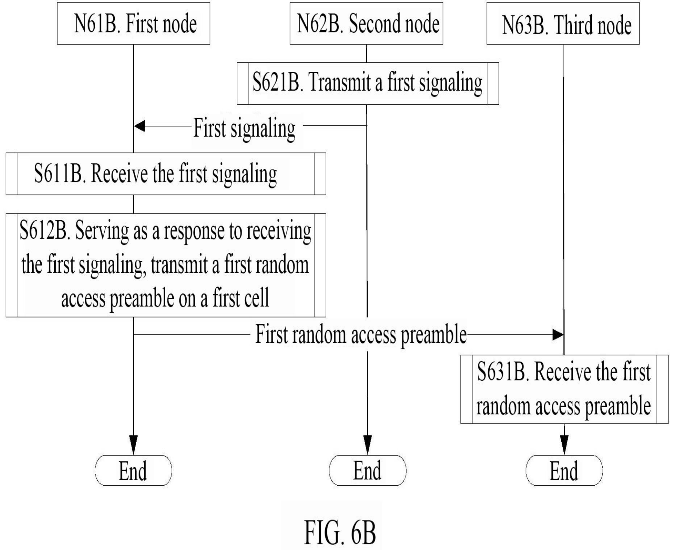

Embodiment 6B illustrates a flowchart of a radio signal transmission according to one embodiment of the present application, as shown in FIG. 6B. In FIG. 6B, the first node N61B and the second node N62B are transmitted through a cell to which the first signaling belongs; and the first node N61B and the third node N63B are transmitted through the first cell.

For **the first node N61B,** a first signaling is received in step S611B; and serving as a response to receiving the first signaling, a first random access preamble is transmitted on a first cell in step S612B.

For **the second node N62B,** a first signaling is transmitted in step S621B.

For **the third node N63B,** a first random access preamble is received in step S631B.

As one embodiment, a cell to which the first signaling belongs is a serving cell.

As one embodiment, the second node N62B and the third node N63B are co-located.

As one embodiment, the second node N62B and the third node N63B are the same gNB-DU (Distributed Unit).

As one embodiment, the second node N62B and the third node N63B are the same gNB-CU (Central Unit).

As one embodiment, the second node N62B and the third node N63B are different nodes.

As one embodiment, the second node N62B and the third node N63B are different gNB-DUs.

As one embodiment, the second node N62B and the third node N63B are different gNB-CUs.

As one embodiment, the second node N62B is a base station of a serving cell of the first node.

As one embodiment, the second node N62B is a transmit/ receive point of a serving cell of the first node.

As one embodiment, the third node N63B is a base station of the first cell.

As one embodiment, the third node N63B is a transmit/ receive point of the first cell.

As one embodiment, the second node N62B and the third node N63B are connected through ideal backhaul.

As one embodiment, the second node N62B and the third node N63B are connected through non-ideal backhaul.

As one embodiment, the first condition set comprises receiving a first signaling, the first signaling being used for triggering for transmitting a first random access preamble on the first cell.

As one embodiment, the first signaling is received earlier than the third signaling, and the first signaling is received later than the second signaling.

As one embodiment, a time interval between transmission time of the first signaling and transmission time of the second signaling is implemented by a network.

As one embodiment, the first signaling is a signaling of a protocol layer below an RRC sublayer.

As one embodiment, the first signaling is a physical layer signaling.

As one embodiment, the first signaling is a PDCCH (Physical Downlink Control Channel) order.

As one embodiment, the first signaling is an enhanced PDCCH order.

As one embodiment, the first signaling is an MAC (Medium Access Control) sublayer signaling.

As one embodiment, the first signaling is an MAC CE (Control Element).

As one embodiment, the first signaling designates the first cell.

As one embodiment, the first transmitter, serving as a response to receiving the first signaling, transmits the first random access preamble on the first cell.

As one embodiment, the first random access preamble is used for determining the timing advance command.

As one embodiment, coherent detection for the first random access preamble is used for determining the timing advance command.

As one embodiment, a base station of the first cell obtains the timing advance command according to the first random access preamble, and the timing advance command is issued through the third signaling after being transmitted to a base station of a cell to which the third signaling belongs.

As one embodiment, a cell to which the first signaling belongs is different from the first cell.

As one embodiment, the first signaling designates the first random access preamble.

As one embodiment, the first signaling comprises a first random access preamble index.

As one embodiment, the second signaling is used for configuring at least one random access preamble, the first signaling designates the first random access preamble, and the first random access preamble is transmitted on the first cell, wherein the first random access preamble is one of the at least one random access preamble.

As one embodiment, the first random access preamble is one signature sequence.

As one embodiment, the first random access preamble is one Gold sequence.

As one embodiment, the first random access preamble is one M sequence.

As one embodiment, the first random access preamble is one ZC (Zadoff-Chu) sequence.

As one embodiment, the first random access preamble is reserved to the first node.

As one embodiment, the first random access preamble is reserved to the first cell.

As one embodiment, the first random access preamble is contention-free.

As one embodiment, the first signaling designates an SSB associated with the first random access preamble.

As one embodiment, the first signaling comprises an index of an SSB associated with the first random access preamble.

As one sub-embodiment of the above two embodiments, the SSB is Synchronization Signal Block.

As one sub-embodiment of the above two embodiments, the SSB is Synchronization Signal/Physical Broadcast Channel Block.

As one embodiment, the first signaling comprises a UL (Uplink)/SUL (Supplementary Uplink) designation.

As one embodiment, the first signaling comprises a PRACH (Physical Random Access Channel) mask index.

As one embodiment, the first signaling designates an RACH (Random Access Channel) configuration.

As one embodiment, the RACH configuration comprises a CFRA (Contention Free Random Access) resource configuration.

As one embodiment, a resource designated by the first signaling for transmitting the first random access preamble is transmitted to the first node through the second node N62B after being allocated by the third node N63B.

As one embodiment, an air interface resource designated by the first signaling for transmitting the first random access preamble is an air interface resource on the first cell.

As one embodiment, the first signaling is used for initiating a random access process, the random access process comprising transmitting the first random access preamble.

As one embodiment, the first signaling is only used for triggering for transmitting the first random access preamble, and the first signaling is not used for initiating a random access process.

As one sub-embodiment of the above embodiment, after transmitting the first random access preamble, the first node does not initiate an ra-Response Window (random access Response Window), wherein the first random access preamble belongs to a 4-step random access process.

As one sub-embodiment of the above embodiment, after transmitting the first random access preamble, the first node does not initiate an msgB-ResponseWindow (message B Response Window), wherein the first random access preamble belongs to a 2-step random access process.

As one sub-embodiment of the above embodiment, after transmitting the first random access preamble, the first node does not monitor a random access response on the first cell.

As one embodiment, the random access response is an RAR (Random Access Response).

As one embodiment, the random access response is an MsgB (Message B).

As one embodiment, transmission of the first signaling and transmission of the third signaling are implemented by a network.

As one embodiment, the first cell waiting to be designated as a serving cell comprises: having received the first signaling and not yet having received the third signaling.

### Embodiment 7

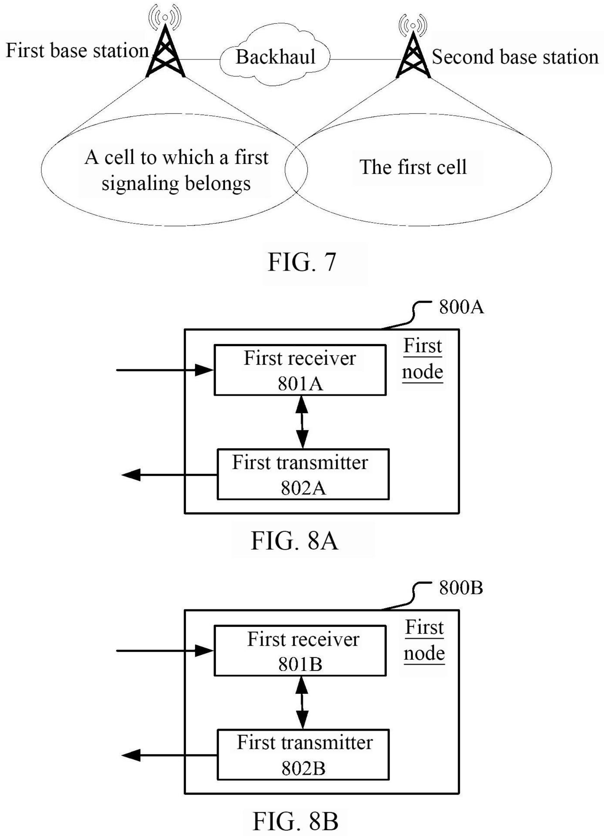

Embodiment 7 illustrates a schematic diagram of a network structure according to one embodiment of the present application, as shown in FIG. 7.

In FIG. 7, a first base station is a maintenance base station of a cell to which the first signaling belongs, and a second base station is a maintenance base station of the first cell. The cell to which the first signaling belongs is different from the first cell. The first base station and the second base station are connected through a backhaul network.

It should be noted that the present application does not limit a connection between the first base station and the second base station through a fronthaul network.

As one embodiment, a cell to which the first signaling belongs is a primary cell.

As one embodiment, a cell to which the first signaling belongs is a secondary cell.

As one embodiment, the first cell is a candidate cell for cell switch.

As one embodiment, a cell to which the first signaling belongs is the same as a cell to which the second signaling belongs.

As one embodiment, a cell to which the first signaling belongs is different from a cell to which the second signaling belongs.

As one embodiment, a cell to which the first signaling belongs is the same as a cell to which the third signaling belongs.

As one embodiment, a cell to which the first signaling belongs is different from a cell to which the third signaling belongs.

As one embodiment, the backhaul network is ideal.

As one embodiment, the backhaul network is non-ideal.

As one embodiment, a cell to which one signaling belongs comprises: one signaling is transmitted on one cell.

As one embodiment, a cell to which one signaling belongs comprises: one signaling occupies an air interface resource of one cell.

### Embodiment 8A

Embodiment 8A illustrates a structural block diagram of a processing apparatus in a first node according to one embodiment of the present application, as shown in FIG. 8A. In FIG. 8A, the processing apparatus 800A in the first node comprises a first receiver 801A and a first transmitter 802A; and the first node 800A is one piece of UE.

In Embodiment 8A, the first receiver 801A receives a first signaling, the first signaling being used for configuring an uplink transmission on a first cell to support dynamic waveform switching; and the first transmitter 802A transmits a first PUSCH, the first PUSCH comprising a first MAC CE, wherein the first MAC CE designates a first power value for the first cell, and the first power value is calculated based on a first waveform; whether the first MAC CE designates a second power value for the first cell depends on the first cell, and the second power value is calculated based on a second waveform; and the dynamic waveform switching is between the first waveform and the second waveform.

As one embodiment, according to the configuration of the first signaling, at least one UL grant DCI format used for scheduling the first cell comprises 1 bit, the 1 bit designating one waveform from the first waveform and the second waveform.

As one embodiment, whether the first MAC CE designates a second power value for the first cell depending on the first cell comprises: when the first cell is a serving cell, the first MAC CE designates the second power value for the first cell.

As one embodiment, whether the first MAC CE designates a second power value for the first cell depending on the first cell comprises: when the first cell waits to be designated as a serving cell, the first MAC CE does not designate the second power value for the first cell.

As one embodiment, whether the first MAC CE designates a second power value for the first cell depending on the first cell comprises: when the first cell waits to be designated as a serving cell, whether the first MAC CE designates the second power value for the first cell is related to resources allocated to the first PUSCH.

As one embodiment, when the first cell waits to be designated as a serving cell, the first waveform is determined by the first node itself, wherein a subheader of the first MAC CE comprises 1 bit, and the 1 bit designates the first waveform.

As one embodiment, the first receiver 801A receives a second signaling, the second signaling being used for triggering for transmitting a first random access preamble on the first cell; and the first transmitter 802A, serving as a response to receiving the second signaling, triggers a first PHR for the first cell, wherein at least the first PHR is used for generating the first MAC CE; and the first cell waits to be designated as a serving cell.

As one embodiment, the first receiver 801A comprises a receiving device 454 (comprising an antenna 452), a receiving processor 456, a multi-antenna receiving processor 458, and a controller/processor 459 in FIG. 4 of the present application.

As one embodiment, the first receiver 801A comprises at least one of the receiving device 454 (comprising the antenna 452), the receiving processor 456, the multi-antenna receiving processor 458, or the controller/processor 459 in FIG. 4 of the present application.

As one embodiment, the first transmitter 802A comprises a transmitting device 454 (comprising the antenna 452), a transmitting processor 468, a multi-antenna transmitting processor 457, and the controller/processor 459 in FIG. 4 of the present application.

As one embodiment, the first transmitter 802A comprises at least one of the transmitting device 454 (comprising the antenna 452), the transmitting processor 468, the multi-antenna transmitting processor 457, or the controller/processor 459 in FIG. 4 of the present application.

### Embodiment 8B

Embodiment 8B illustrates a structural block diagram of a processing apparatus in a first node according to one embodiment of the present application, as shown in FIG. 8B. In FIG. 8B, the processing apparatus 800B in the first node comprises a first receiver 801B and a first transmitter 802B; and the first node 800B is one piece of UE.

In Embodiment 8B, the first transmitter 802B, serving as a response to any condition in a first condition set being satisfied, triggers a first PHR for a first cell, the first cell waiting to be designated as a serving cell, wherein the first condition set comprises: since the latest PHR transmission, changes in path loss of at least one first type of signal in the first cell exceed a first threshold, and the first threshold is configurable.

As one embodiment, the first condition set comprises receiving a first signaling, the first signaling being used for triggering for transmitting a first random access preamble on the first cell.

As one embodiment, the first transmitter 802B, serving as a response to a second condition set being satisfied, transmits a first PHR MAC CE, wherein the second condition set comprises at least one PHR being triggered and not cancelled, the at least one PHR comprising the first PHR.

As one embodiment, the first transmitter 802B, serving as a response to a second condition set being satisfied, transmits a first PHR MAC CE, wherein the second condition set comprises at least one PHR being triggered and not cancelled, the at least one PHR comprising the first PHR; the first PHR MAC CE comprises at least the latter of a first field and a second field, the first field designating the first cell, and the second field designating a maximum output power value for a first transmission waveform, wherein the first transmission waveform is one of candidate waveform sets, the candidate waveform sets comprising DFT-S-OFDM and CP-OFDM; and the first transmission waveform is used for an uplink transmission in the first cell.

As one embodiment, the first transmitter 802B, serving as a response to a second condition set being satisfied, transmits a first PHR MAC CE, wherein the second condition set comprises at least one PHR being triggered and not cancelled, the at least one PHR comprising the first PHR; the first PHR MAC CE comprises at least the latter of a first field and a second field, the first field designating the first cell, and the second field designating a maximum output power value for a first transmission waveform, wherein the first transmission waveform is one of candidate waveform sets, the candidate waveform sets comprising DFT-S-OFDM and CP-OFDM; and the first transmission waveform is used for an uplink transmission of the first cell; and the first receiver 801 receives a second signaling, the second signaling being used for configuring the first cell, and the second signaling designating the first transmission waveform.

As one embodiment, the first transmitter 802B, serving as a response to a second condition set being satisfied, transmits a first PHR MAC CE, wherein the second condition set comprises at least one PHR being triggered and not cancelled, the at least one PHR comprising the first PHR; the first PHR MAC CE comprises at least the latter of a first field and a second field, the first field designating the first cell, and the second field designating a maximum output power value for a first transmission waveform, wherein the first transmission waveform is one of candidate waveform sets, the candidate waveform sets comprising DFT-S-OFDM and CP-OFDM; and the first transmission waveform is used for an uplink transmission of the first cell; and the first node determines the first transmission waveform by itself.

As one embodiment, the first receiver 801B receives a third signaling after the first signaling, the third signaling designating the first cell as a serving cell, wherein the third signaling is used for cell switch in a protocol layer below an RRC layer.

As one embodiment, the first receiver 801B comprises a receiving device 454 (comprising an antenna 452), a receiving processor 456, a multi-antenna receiving processor 458, and a controller/processor 459 in FIG. 4 of the present application.

As one embodiment, the first receiver 801B comprises at least one of the receiving device 454 (comprising the antenna 452), the receiving processor 456, the multi-antenna receiving processor 458, or the controller/processor 459 in FIG. 4 of the present application.

As one embodiment, the first transmitter 802B comprises a transmitting device 454 (comprising the antenna 452), a transmitting processor 468, a multi-antenna transmitting processor 457, and the controller/processor 459 in FIG. 4 of the present application.

As one embodiment, the first transmitter 802B comprises at least one of the transmitting device 454 (comprising the antenna 452), the transmitting processor 468, the multi-antenna transmitting processor 457, or the controller/processor 459 in FIG. 4 of the present application.

### Embodiment 9A

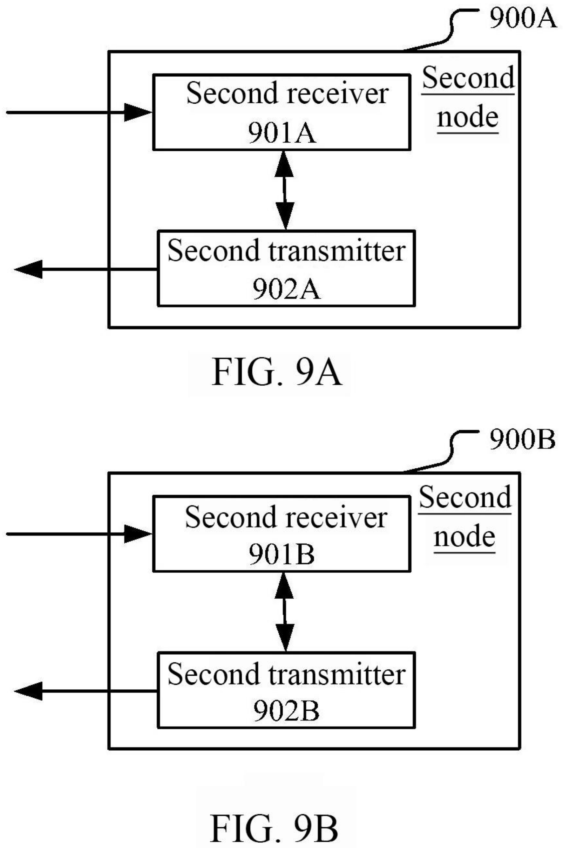

Embodiment 9A illustrates a structural block diagram of a processing apparatus in a second node according to one embodiment of the present application, as shown in FIG. 9A. In FIG. 9A, the processing apparatus 900A in the second node comprises a second receiver 901A and a second transmitter 902A; and the second node 900A is one base station.

In Embodiment 9A, the second transmitter 902A transmits a first signaling, the first signaling being used for configuring an uplink transmission on a first cell to support dynamic waveform switching; and the second receiver 901A receives a first PUSCH, the first PUSCH comprising a first MAC CE, wherein the first MAC CE designates a first power value for the first cell, and the first power value is calculated based on a first waveform; whether the first MAC CE designates a second power value for the first cell depends on the first cell, and the second power value is calculated based on a second waveform; and the dynamic waveform switching is between the first waveform and the second waveform.

As one embodiment, according to the configuration of the first signaling, at least one UL grant DCI format used for scheduling the first cell comprises 1 bit, the 1 bit designating one waveform from the first waveform and the second waveform.

As one embodiment, whether the first MAC CE designates a second power value for the first cell depending on the first cell comprises: when the first cell is a serving cell, the first MAC CE designates the second power value for the first cell.

As one embodiment, whether the first MAC CE designates a second power value for the first cell depending on the first cell comprises: when the first cell waits to be designated as a serving cell, the first MAC CE does not designate the second power value for the first cell.

As one embodiment, whether the first MAC CE designates a second power value for the first cell depending on the first cell comprises: when the first cell waits to be designated as a serving cell, whether the first MAC CE designates the second power value for the first cell is related to resources allocated to the first PUSCH.

As one embodiment, when the first cell waits to be designated as a serving cell, the first waveform is determined by a recipient of the first signaling itself, wherein a subheader of the first MAC CE comprises 1 bit, and the 1 bit designates the first waveform.

As one embodiment, the second transmitter 902A transmits a second signaling, the second signaling being used for triggering for transmitting a first random access preamble on the first cell, wherein the second signaling is used for triggering a first PHR for the first cell; at least the first PHR is used for generating the first MAC CE; and the first cell waits to be designated as a serving cell.

As one embodiment, the second receiver 901A comprises a receiving device 418 (comprising an antenna 420), a receiving processor 470, a multi-antenna receiving processor 472, and a controller/processor 475 in FIG. 4 of the present application.

As one embodiment, the second receiver 901A comprises at least one of the receiving device 418 (comprising the antenna 420), the receiving processor 470, the multi-antenna receiving processor 472, or the controller/processor 475 in FIG. 4 of the present application.

As one embodiment, the second transmitter 902A comprises a transmitting device 418 (comprising an antenna 420), a transmitting processor 416, a multi-antenna transmitting processor 471, and a controller/processor 475 in FIG. 4 of the present application.

As one embodiment, the second transmitter 902A comprises at least one of the transmitting device 418 (comprising the antenna 420), the transmitting processor 416, the multi-antenna transmitting processor 471, or the controller/processor 475 in FIG. 4 of the present application.

### Embodiment 9B

Embodiment 9B illustrates a structural block diagram of a processing apparatus in a second node according to one embodiment of the present application, as shown in FIG. 9B. In FIG. 9B, the processing apparatus 900B in the second node comprises a second receiver 901B and a second transmitter 902B; and the second node 900B is one base station.

In Embodiment 9B, the second receiver 901B, when a second condition set is satisfied, receives a first PHR MAC CE, wherein the second condition set comprises at least one PHR being triggered and not cancelled, the at least one PHR comprising a first PHR, the first PHR being triggered for a first cell when any condition in a first condition set is satisfied, and the first cell waiting to be designated as a serving cell; and the first condition set comprises: since the latest PHR transmission, changes in path loss of at least one first type of signal in the first cell exceed a first threshold, and the first threshold is configurable.

As one embodiment, the first condition set comprises receiving a first signaling, the first signaling being used for triggering for transmitting a first random access preamble on the first cell.

As one embodiment, the first PHR MAC CE comprises at least the latter of a first field and a second field, the first field designating the first cell, and the second field designating a maximum output power value for a first transmission waveform, wherein the first transmission waveform is one of candidate waveform sets, the candidate waveform sets comprising DFT-S-OFDM and CP-OFDM; and the first transmission waveform is used for an uplink transmission in the first cell.

As one embodiment, the first PHR MAC CE comprises at least the latter of a first field and a second field, the first field designating the first cell, and the second field designating a maximum output power value for a first transmission waveform, wherein the first transmission waveform is one of candidate waveform sets, the candidate waveform sets comprising DFT-S-OFDM and CP-OFDM; and the first transmission waveform is used for an uplink transmission of the first cell; and the second transmitter 902B transmits a second signaling, the second signaling being used for configuring the first cell, and the second signaling designating the first transmission waveform.

As one embodiment, the first PHR MAC CE comprises at least the latter of a first field and a second field, the first field designating the first cell, and the second field designating a maximum output power value for a first transmission waveform, wherein the first transmission waveform is one of candidate waveform sets, the candidate waveform sets comprising DFT-S-OFDM and CP-OFDM; and the first transmission waveform is used for an uplink transmission of the first cell; and a sender of the first PHR MAC CE determines the first transmission waveform by itself.

As one embodiment, the second transmitter 902B transmits a third signaling after the first signaling, the third signaling designating the first cell as a serving cell, wherein the third signaling is used for cell switch at a protocol layer below an RRC layer.

As one embodiment, the second receiver 901B comprises a receiving device 418 (comprising an antenna 420), a receiving processor 470, a multi-antenna receiving processor 472, and a controller/processor 475 in FIG. 4 of the present application.

As one embodiment, the second receiver 901B comprises at least one of the receiving device 418 (comprising the antenna 420), the receiving processor 470, the multi-antenna receiving processor 472, or the controller/processor 475 in FIG. 4 of the present application.

As one embodiment, the second transmitter 902B comprises a transmitting device 418 (comprising the antenna 420), a transmitting processor 416, a multi-antenna transmitting processor 471, and the controller/processor 475 in FIG. 4 of the present application.

As one embodiment, the second transmitter 902B comprises at least one of the transmitting device 418 (comprising the antenna 420), the transmitting processor 416, the multi-antenna transmitting processor 471, or the controller/processor 475 in FIG. 4 of the present application.

### Embodiment 10

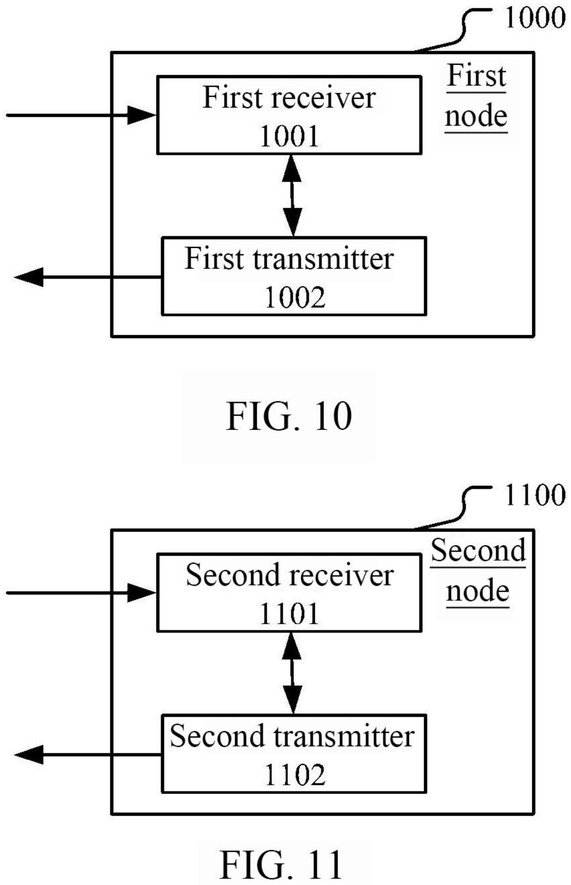

Embodiment 10 illustrates a structural block diagram of a processing apparatus in a first node according to one embodiment of the present application, as shown in FIG. 10. In FIG. 10, the processing apparatus 1000 in the first node comprises a first receiver 1001 and a first transmitter 1002; and the first node 1000 is one piece of UE.

In Embodiment 10, the first receiver 1001 receives a first signaling, the first signaling being used for triggering for transmitting a first random access preamble in a first cell, and the first transmitter 1002, serving as a response to receiving the first signaling, triggers a first PHR for a first cell, the first cell waiting to be designated as a serving cell.

As one embodiment, the first condition set comprises receiving a first signaling, the first signaling being used for triggering for transmitting a first random access preamble on the first cell.

As one embodiment, the first transmitter 1002, serving as a response to a second condition set being satisfied, transmits a first PHR MAC CE, wherein the second condition set comprises at least one PHR being triggered and not cancelled, the at least one PHR comprising the first PHR.

As one embodiment, the first transmitter 1002, serving as a response to a second condition set being satisfied, transmits a first PHR MAC CE, wherein the second condition set comprises at least one PHR being triggered and not cancelled, the at least one PHR comprising the first PHR; the first PHR MAC CE comprises at least the latter of a first field and a second field, the first field designating the first cell, and the second field designating a maximum output power value for a first transmission waveform, wherein the first transmission waveform is one of candidate waveform sets, the candidate waveform sets comprising DFT-S-OFDM and CP-OFDM; and the first transmission waveform is used for an uplink transmission in the first cell.

As one embodiment, the first transmitter 1002, serving as a response to a second condition set being satisfied, transmits a first PHR MAC CE, wherein the second condition set comprises at least one PHR being triggered and not cancelled, the at least one PHR comprising the first PHR; the first PHR MAC CE comprises at least the latter of a first field and a second field, the first field designating the first cell, and the second field designating a maximum output power value for a first transmission waveform, wherein the first transmission waveform is one of candidate waveform sets, the candidate waveform sets comprising DFT-S-OFDM and CP-OFDM; and the first transmission waveform is used for an uplink transmission of the first cell; and the first receiver 1001 receives a second signaling, the second signaling being used for configuring the first cell, and the second signaling designating the first transmission waveform.

As one embodiment, the first transmitter 1002, serving as a response to a second condition set being satisfied, transmits a first PHR MAC CE, wherein the second condition set comprises at least one PHR being triggered and not cancelled, the at least one PHR comprising the first PHR; the first PHR MAC CE comprises at least the latter of a first field and a second field, the first field designating the first cell, and the second field designating a maximum output power value for a first transmission waveform, wherein the first transmission waveform is one of candidate waveform sets, the candidate waveform sets comprising DFT-S-OFDM and CP-OFDM; and the first transmission waveform is used for an uplink transmission of the first cell; and the first node determines the first transmission waveform by itself.

As one embodiment, the first receiver 1001 receives a third signaling after the first signaling, the third signaling designating the first cell as a serving cell, wherein the third signaling is used for cell switch at a protocol layer below an RRC layer.

As one embodiment, the first receiver 1001 receives a third signaling after the first signaling, the third signaling designating the first cell as a serving cell, wherein the third signaling is used for cell switch at a protocol layer below an RRC layer; the third signaling comprises a timing advance command, the timing advance command being used for maintaining an uplink time alignment of the first cell, wherein the first random access preamble is used for determining the timing advance command.

As one embodiment, the first receiver 1001 comprises a receiving device 454 (comprising an antenna 452), a receiving processor 456, a multi-antenna receiving processor 458, and a controller/processor 459 in FIG. 4 of the present application.

As one embodiment, the first receiver 1001 comprises at least one of the receiving device 454 (comprising the antenna 452), the receiving processor 456, the multi-antenna receiving processor 458, or the controller/processor 459 in FIG. 4 of the present application.

As one embodiment, the first transmitter 1002 comprises a transmitting device 454 (comprising the antenna 452), a transmitting processor 4610, a multi-antenna transmitting processor 457, and the controller/processor 459 in FIG. 4 of the present application.

As one embodiment, the first transmitter 1002 comprises at least one of the transmitting device 454 (comprising the antenna 452), the transmitting processor 4610, the multi-antenna transmitting processor 457, or the controller/processor 459 in FIG. 4 of the present application.

### Embodiment 11

Embodiment 11 illustrates a structural block diagram of a processing apparatus in a second node according to one embodiment of the present application, as shown in FIG. 11. In FIG. 11, the processing apparatus 1100 in the second node comprises a second receiver 1101 and a second transmitter 1102; and the second node 1100 is one base station.

In Embodiment 11, the second transmitter 1102 transmits a first signaling, the first signaling being used for triggering for transmitting a first random access preamble on a first cell, the first signaling being used for triggering a first PHR for the first cell, and the first cell waiting to be designated as a serving cell.

As one embodiment, the second receiver 1101, when a second condition set is satisfied, receives a first PHR MAC CE, wherein the second condition set comprises at least one PHR being triggered and not cancelled, the at least one PHR comprising a first PHR.

As one embodiment, the second receiver 1101, when a second condition set is satisfied, receives a first PHR MAC CE, wherein the second condition set comprises at least one PHR being triggered and not cancelled, the at least one PHR comprising a first PHR; the first PHR MAC CE comprises at least the latter of a first field and a second field, the first field designating the first cell, and the second field designating a maximum output power value for a first transmission waveform, wherein the first transmission waveform is one of candidate waveform sets, the candidate waveform sets comprising DFT-S-OFDM and CP-OFDM; and the first transmission waveform is used for an uplink transmission in the first cell.

As one embodiment, the second receiver 1101, when a second condition set is satisfied, receives a first PHR MAC CE, wherein the second condition set comprises at least one PHR being triggered and not cancelled, the at least one PHR comprising a first PHR; the first PHR MAC CE comprises at least the latter of a first field and a second field, the first field designating the first cell, and the second field designating a maximum output power value for a first transmission waveform, wherein the first transmission waveform is one of candidate waveform sets, the candidate waveform sets comprising DFT-S-OFDM and CP-OFDM; and the first transmission waveform is used for an uplink transmission of the first cell; and the second transmitter 1102 transmits a second signaling, the second signaling being used for configuring the first cell, and the second signaling designating the first transmission waveform.

As one embodiment, the second receiver 1101, when a second condition set is satisfied, receives a first PHR MAC CE, wherein the second condition set comprises at least one PHR being triggered and not cancelled, the at least one PHR comprising a first PHR; the first PHR MAC CE comprises at least the latter of a first field and a second field, the first field designating the first cell, and the second field designating a maximum output power value for a first transmission waveform, wherein the first transmission waveform is one of candidate waveform sets, the candidate waveform sets comprising DFT-S-OFDM and CP-OFDM; and the first transmission waveform is used for an uplink transmission of the first cell; and a recipient of the first signaling determines the first transmission waveform by itself.

As one embodiment, the second transmitter 1102 transmits a third signaling after the first signaling, the third signaling designating the first cell as a serving cell, wherein the third signaling is used for cell switch at a protocol layer below an RRC layer.

As one embodiment, the second transmitter 1102 transmits a third signaling after the first signaling, the third signaling designating the first cell as a serving cell, wherein the third signaling is used for cell switch at a protocol layer below an RRC layer; the third signaling comprises a timing advance command, the timing advance command being used for maintaining an uplink time alignment of the first cell, wherein the first random access preamble is used for determining the timing advance command.

As one embodiment, the second receiver 1101 comprises a receiving device 418 (comprising an antenna 420), a receiving processor 470, a multi-antenna receiving processor 472, and a controller/processor 475 in FIG. 4 of the present application.

As one embodiment, the second receiver 1101 comprises at least one of the receiving device 418 (comprising the antenna 420), the receiving processor 470, the multi-antenna receiving processor 472, and the controller/processor 475 in FIG. 4 of the present application.

As one embodiment, the second transmitter 1102 comprises a transmitting device 418 (comprising the antenna 420), a transmitting processor 416, a multi-antenna transmitting processor 471, and the controller/processor 475 in FIG. 4 of the present application.

As one embodiment, the second transmitter 1102 comprises at least one of the transmitting device 418 (comprising the antenna 420), the transmitting processor 416, the multi-antenna transmitting processor 471, and the controller/processor 475 in FIG. 4 of the present application.

Those of ordinary skill in the art can understand that all or part of the steps in the above method may be completed by instructing relevant hardware through a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of a software function module, and the present application is not limited to any specific form of software and hardware combination. The first type of communication node or UE or terminal in the present application includes, but is not limited to, mobile phones, tablet computers, laptops, network cards, low-power devices, eMTC (enhanced Machine Type Communication) devices, NB-IoT devices, vehicle-mounted communication devices, aircrafts, airplanes, drones, remote-controlled airplanes and other wireless communication devices. The second type of communication node or base station or network-side device in the present application includes, but is not limited to, Macro Cell base stations, Micro cell base stations, Femtocells, relay base stations, eNBs, gNBs, transmission reception points (TRPs), relay satellites, satellite base stations, aerial base stations and other wireless communication devices.

The above is only a preferred embodiment of the present application and is not used to limit the scope of protection of the present application. Any modifications, equivalent replacements, improvements, etc. made within the spirit and principles of the present application should be comprised in the scope of protection of the present application.

## Claims

1. A first node used in new radio (NR), **characterized by** comprising:
a first transmitter, serving as a response to any condition in a first condition set being satisfied, triggering a first PHR for a first cell, the first cell waiting to be designated as a serving cell,
wherein the first condition set comprises: since the latest PHR transmission, changes in path loss of at least one first type of signal in the first cell exceed a first threshold, and the first threshold is configurable.

2. The first node according to claim 1, **characterized in that** the first condition set comprises receiving a first signaling, the first signaling being used for triggering for transmitting a first random access preamble in the first cell.

3. The first node according to claim 1 or 2, **characterized by** comprising:
the first transmitter, serving as a response to a second condition set being satisfied, transmitting a first PHR MAC CE,
wherein the second condition set comprises at least one PHR being triggered and not cancelled, the at least one PHR comprising the first PHR.

4. The first node according to claim 3, **characterized in that** the first PHR MAC CE comprises at least the latter of a first field and a second field, the first field designating the first cell, and the second field designating a maximum output power value for a first transmission waveform,
wherein the first transmission waveform is one of candidate waveform sets, the candidate waveform sets comprising DFT-S-OFDM and CP-OFDM; and the first transmission waveform is used for an uplink transmission in the first cell.

5. The first node according to claim 4, **characterized by** comprising:
a first receiver receiving a second signaling, the second signaling being used for configuring the first cell, and the second signaling designating the first transmission waveform.

6. The first node according to claim 4, **characterized in that** the first node determines the first transmission waveform by itself.

7. The first node according to any one of claims 1 to 6, **characterized by** comprising:
a first receiver receiving a third signaling after the first signaling, the third signaling designating the first cell as a serving cell,
wherein the third signaling is used for cell switch in a protocol layer below an RRC layer.

8. A second node used in new radio (NR), **characterized by** comprising:
a second receiver, when a second condition set is satisfied, receiving a first PHR MAC CE,
wherein the second condition set comprises at least one PHR being triggered and not cancelled, the at least one PHR comprising a first PHR, the first PHR being triggered for a first cell when any condition in a first condition set is satisfied, and the first cell waiting to be designated as a serving cell; and the first condition set comprises: since the latest PHR transmission, changes in path loss of at least one first type of signal in the first cell exceed a first threshold, and the first threshold is configurable.

9. A method in a first node used in new radio (NR), **characterized by** comprising:
serving as a response to any condition in a first condition set being satisfied, triggering a first PHR for a first cell, the first cell waiting to be designated as a serving cell,
wherein the first condition set comprises: since the latest PHR transmission, changes in path loss of at least one first type of signal in the first cell exceed a first threshold, and the first threshold is configurable.

10. A method in a second node used in new radio (NR), **characterized by** comprising:
when a second condition set is satisfied, receiving a first PHR MAC CE,
wherein the second condition set comprises at least one PHR being triggered and not cancelled, the at least one PHR comprising a first PHR, the first PHR being triggered for a first cell when any condition in a first condition set is satisfied, and the first cell waiting to be designated as a serving cell; and the first condition set comprises: since the latest PHR transmission, changes in path loss of at least one first type of signal in the first cell exceed a first threshold, and the first threshold is configurable.
